# EUROPÄISCHE PATENTSCHRIFT

(11) **EP 0 948 395 B1**
(45) Veröffentlichungstag und Bekanntmachung des Hinweises auf die Patenterteilung: **25.01.2006**
(21) Anmeldenummer: 97952806.4
(22) Anmeldetag: 26.11.1997
(51) Int. Cl.: B01J 13/00

(54) **ORGANISCH MODIFIZIERTE AEROGELE, VERFAHREN ZU IHRER HERSTELLUNG DURCH OBERFLÄCHENMODIFIKATION DES WÄSSRIGEN GELS OHNE VORHERIGEN LÖSUNGSMITTELTAUSCH UND ANSCHLIESSENDE TROCKNUNG SOWIE DEREN VERWENDUNG**
ORGANICALLY MODIFIED AEROGELS, METHOD FOR THEIR PRODUCTION BY SURFACE MODIFICATION OF THE AQUEOUS GEL WITHOUT PREVIOUS SOLVENT EXCHANGE AND SUBSEQUENT DRYING AND THE USE THEREOF
AEROGELS MODIFIES ORGANIQUEMENT, LEUR PROCEDE DE PREPARATION PAR MODIFICATION EN SURFACE DU GEL AQUEUX SANS ECHANGE DE SOLVANT PREALABLE ET SECHAGE ULTERIEUR, AINSI QUE LEUR UTILISATION

(30) Priorität: 26.11.1996 DE 19648798
(43) Veröffentlichungstag der Anmeldung: 13.10.1999
(73) Patentinhaber: CABOT CORPORATION, Boston, Massachusetts 02210-2019 (US)
(72) Erfinder: SCHWERTFEGER, Fritz, D-60529 Frankfurt am Main (DE); FRANK, Dierk, D-65719 Hofheim (DE)
(74) Vertreter: Luderschmidt, Schüler & Partner GbR
(86) Internationale Anmeldenummer: PCT/EP1997/006595
(87) Internationale Veröffentlichungsnummer: WO 1998/023366

(56) Entgegenhaltungen:
- WO-A-94/25149
- DE-A- 4 316 540
- US-A- 5 508 341

## Beschreibung

Die vorliegende Erfindung betrifft neue organisch modifizierte Aerogele, Verfahren zu ihrer Herstellung sowie ihre Verwendung.

Aerogele, insbesondere solche mit Porositäten über 60 % und Dichten unter 0,6 g/cm³, weisen eine äußerst geringe thermische Leitfähigkeit auf und finden deshalb Anwendung als Wärmeisolationsmaterialien, wie z.B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel.

Bei der Verwendung des Begriffs Aerogele in der vorliegenden Anmeldung handelt es sich um Aerogele im weiteren Sinn, d.h. im Sinn von "Gel mit Luft als Dispersionsmittel".

Darüber hinaus kann man Aerogele entsprechend dem Typ des Gelgerüsts grundsätzlich in anorganische und organische Aerogele unterteilen.

Anorganische Aerogele sind schon seit 1931 bekannt (S.S.Kistler, Nature 1931, 127,741). Diese ersten Aerogele wurden aus Wasserglas und einer Säure als Ausgangsmaterialien hergestellt. Dabei wurde das Wasser in den so erhaltenen Naß-gelen gegen ein organisches Lösungsmittel ausgetauscht und dieses Lyogel anschließend überkritisch getrocknet. Auf diese Weise wurden hydrophile Aerogele erhalten, wie z.B. in der US-A-2,093,454 offenbart.

Bis heute wurden unterschiedlichste anorganische Aerogele hergestellt. So konnten z.B. SiO₂-, Al₂O₃-, TiO₂-, ZrO₂-, SnO₂-, Li₂O-, CeO₂- und V₂O₅-Aerogele sowie Mischungen aus diesen hergestellt werden (H.D. Gesser, P.C. Goswami, Chem. Rev. 1989, 89, 765ff).

Seit einigen Jahren sind auch organische Aerogele bekannt. In der Literatur findet man z.B. organische Aerogele auf der Basis von Resorcin/Formaldehyd, Melamin/Formaldehyd oder Resorcin/Furfural (R.W. Pekala, J. Mater. Sci. 1989, 24, 3221, US-A-5,508,341, RD 388047, WO 94/22943 und US-A-5,556,892). Darüber hinaus sind auch noch organische Aerogele aus Polyisocyanaten (WO 95/03358) und Polyurethanen (US-A-5,484,818) bekannt. Dabei geht man, wie zum Beispiel in der US-A-5,508,341 beschrieben, von Ausgangsmaterialien wie Formaldehyd und Resorcinol in Wasser gelöst aus, bringt diese durch geeignete Katalysatoren miteinander zur Reaktion, tauscht das Wasser in den Poren des gebildeten Gels gegen ein geeignetes organisches Lösungsmittel aus und trocknet anschließend über- kritisch.

Anorganische Aerogele können auf verschiedenen Wegen hergestellt werden.

Zum einen können SiO₂-Aerogele beispielsweise durch saure Hydrolyse und Kondensation von Tetraethylorthosilikat in Ethanol hergestellt werden. Dabei entsteht ein Gel, das durch überkritische Trocknung unter Erhaltung der Struktur getrocknet werden kann. Auf dieser Trocknungstechnik basierende Herstellungsverfahren sind z.B. aus der EP-A-0 396 076, der WO 92/03378 und der WO 95/06617 bekannt.

Eine Alternative zu obiger Trocknung bietet ein Verfahren zur unterkritischen Trocknung von SiO₂-Gelen, bei dem diese vor der Trocknung mit einem chlorhaltigen Silylierungsmittel umgesetzt werden. Das SiO₂-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, durch Umsetzung mit Wasser erhalten werden. Nach Austausch des Lösungsmittels gegen ein geeig-netes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend aus einem organischen Lösungsmittel heraus an der Luft getrocknet werden. Damit können Aerogete mit Dichten unter 0,4 g/cm³ und Porositäten über 60 % erreicht werden. Das auf dieser Trocknungstechnik basierende Herstellungsverfahren wird ausführlich in der WO 94/25149 beschrieben.

Die oben beschriebenen Gele können darüber hinaus vor der Trocknung in der alkoholischen Lösung, die die zur Reaktion notwendige Menge Wasser enthält, mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar. Eine erhebliche Kostensenkung kann durch die Verwendung von Wasserglas als Ausgangsmaterial für die Herstellung von SiO₂-Aerogelen erreicht werden.

Dazu kann beispielsweise aus einer wäßrigen Wasserglaslösung mit Hilfe eines lonenaustauscherharzes eine Kieselsäure hergestellt werden, die durch Zugabe einer Base zu einem SiO₂-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren wird ausführlich in der EP-A-0 658 513 beschrieben.

In der US-A-3,015,645 wird das Hydrogel durch Zugabe einer Mineralsäure zu einer Wasserglaslösung erhalten. Nach Bildung des Hydrogels wird das Wasser im Gel gegen ein organisches Lösungsmittel ausgetauscht und danach mittels eines Silylierungsmittels, vorzugsweise einem Chloralkylsilan, silyliert und unterkritisch getrocknet.

In der DE-C-195 02 453 wird die Verwendung eines chlorfreien Silylierungsmittels beschrieben. Dazu wird beispielsweise ein nach den oben beschriebenen Verfahren hergestelltes, silikatisches Lyogel vorgelegt und mit einem chlorfreien Silylierungsmittel umgesetzt. Als Silylierungsmittel werden dabei vorzugsweise Methylisopro-penoxysilane (Me₄₋ₙSi(OC(CH₃)CH₂)ₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Die Verwendung der chlorfreien Silylierungsmittel stellt jedoch einen sehr hohen Kostenfaktor dar.

In der WO 95/06617 und in der DE-A-195 41 279 werden Verfahren zur Herstellung von Kieselsäure-Aerogelen mit hydrophoben Oberflächengruppen offenbart.

In der WO 95/06617 werden die Kieselsäure-Aerogele durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wäßrigen Lösungen anorganischer Basen, wobei der pH-Wert des Hydrogels im Bereich von 7,5 bis 11 gehalten wird, Verdrängung der in dem Hydrogel enthaltenen wäßrigen Phase durch einen Alkohol und anschließende überkritische Trocknung des erhaltenen Alkogels, erhalten.

In der DE-A-195 41 279 werden ähnlich, wie in der WO 95/06617 beschrieben, Kieselsäure-Aerogele hergestellt und anschließend unterkritisch getrocknet.

Bei beiden Verfahren führt jedoch der Verzicht auf chlorhaltige Silylierungsmittel nur zu einem Aerogel mit über Sauerstoff gebundenen, hydrophoben Oberflächengruppen. Diese sind in einer wasserhaltigen Atmosphäre recht leicht wieder abspaltbar. Dadurch ist das beschriebene Aerogel nur kurzzeitig hydrophob.

Allen aus dem Stand der Technik bekannten Verfahren zur Darstellung von Aerogelen mit einer Dichte von weniger als 300 kg/m³ ist gemeinsam, daß das Wasser vor der Trocknung gegen ein organisches Lösungsmittel oder CO₂ ausgetauscht wird. Bei der überkritischen Trocknung wird zuvor das Wasser aus den Poren des Hydrogels gegen ein organisches Lösungsmittel ausgetauscht, damit das Wasser im überkritischen Zustand nicht das Netzwerk an- oder auflöst. Bei der Herstellung durch unterkritische Trocknung erfolgt vor der notwendigen Oberflächenmodifikation ebenfalls ein Austausch des Wassers im Hydrogel gegen ein organisches Lösungsmittel. Dies war und ist nach Ansicht der Fachwelt notwendig, da sich beispielsweise im Falle von Silylienrngsmitteln entweder die Silylierungsmittel nicht in Wasser lösen und daher nicht über die Wasserphase, in der sich üblicherweise die Gelteilchen be-finden, in das Gel eingebracht werden können, oder die Silylierungsmittel in Wasser mit dem selben bzw. mit sich selbst reagieren und damit für die Silylierung des Gels nicht mehr zur Verfügung stehen, oder ihre Reaktivität stark abnimmt.

Ferner ist es möglich, organisch modifizierte Gele ohne abschließende Trocknung zum Aerogel in den unterschiedlichsten Bereichen der Technik, wie z.B. in der Chromatographie, in der Kosmetik und im Pharmabereich einzusetzen.

Wie bei der Herstellung von Aerogelen war auch bei der Herstellung von organisch modifizierten Naßgelen nach Ansicht der Fachwelt ein Austausch des Wassers in den Poren der Gele gegen ein anderes Lösungsmittel notwendig.

Der Austausch des Wassers gegen ein anderes Lösungsmittel ist jedoch in jedem Fall sowohl zeit- als auch energie- und kostenintensiv. Des weiteren sind damit hohe sicherheitstechnische Probleme verbunden.

Aufgabe der vorliegenden Erfindung war es daher, ein Verfahren zur Herstellung von organisch modifizierten Aerogelen bereitzustellen, bei dem ein gängiges Mittel zur Oberflächenmodifikation verwendet, und auf einen Lösungsmittelaustausch des Wassers gegen ein anderes Lösungsmittel verzichtet werden kann.

Diese Aufgabe wird überraschenderweise gelöst, durch ein Verfahren zur Herstellung von organisch modifizierten Aerogelen, bei dem man
a) ein Hydrogel vorlegt,
b) das in Schritt a) erhaltene Hydrogel unter Verzicht eines Lösungsmittelaustausches des Wassers gegen ein anderes Lösungsmittel oberflächenmodifiziert, und
c) das in Schritt b) erhaltene oberflächenmodifizierte Gel trocknet.

Vorzugsweise wird das erhaltene Hydrogel in Schritt b) oberflächensilyliert.

In einer ersten bevorzugten Ausführungsform werden als Silylierungsmittel Disiloxane der Formel I und/oder Disilazane der Formel II eingesetzt ,

R₃Si-O-SiR₃ (I)

R₃Si-N(H)-SiR₃ (II)

wobei die Reste R unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest bedeuten.

In einer zweiten bevorzugten Ausführungsform werden als Silylierungsmittel Silane der Formel R¹₄₋ₙSiClₙ oder R¹₄₋ₙSi(OR²)ₙ mit n = 1 bis 4, eingesetzt, wobei R¹ und R² unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest bedeuten.

Unter einem Hydrogel wird in der vorliegenden Anmeldung ein Gel verstanden, das in mindestens einem Lösungsmittel dispergiert ist, wobei die flüssige Phase mindestens 50 Gew.-%, vorzugsweise mindestens 80 Gew.%, besonders bevorzugt mindestens 90 Gew.-% und insbesondere mindestens 98 Gew.-% Wasser enthält. Ein Hydrogel ist somit der Spezialfall eines Lyogels, d.h. eines Gels das eine Flüssigkeit enthält.

In Schritt b) wird das Silylierungsmittel direkt als Reaktand angeboten, ohne daß vorher ein Austausch des in den Poren enthaltenden Wassers gegen ein organisches Lösungsmittel bzw. CO₂ stattfindet.

Das Netzwerk des Hydrogels kann in jeder beliebigen organischen und/oder anorganischen Grundzusammensetzung vorliegen. Als organische Grundzusammensetzung kommen alle dem Fachmann aus dem Stand der Technik bekannten Systeme in Frage. Bevorzugt ist eine anorganische Grundzusammensetzung auf der Basis von oxidischen Silicium-, Zinn-, Aluminium-, Gallium-, Indium-, Titan- und/oder Zirkoniumverbindungen, besonders bevorzugt auf der Basis von oxidischen Silicium-, Aluminium-, Titan- und/oder Zirkoniumverbindungen. Ganz besonders bevorzugt ist ein silikatisches Hydrogel, das Anteile an Zirkonium-, Aluminium-, Titan-, Vanadium- und/oder Eisenverbindungen enthalten kann, insbesondere ein rein silikatisches Hydrogel. Bei den organischen und/oder anorganischen Grund-zusammensetzungen müssen die unterschiedlichen Komponenten nicht notwendigerweise homogen verteilt sein und/oder ein durchgehendes Netzwerk bilden. Es ist auch möglich, daß einzelne Komponenten ganz oder teilweise in Form von Einschlüssen, Einzelkeimen und/oder Anlagerungen im Netzwerk vorliegen.

Im folgenden werden drei bevorzugte Ausführungsformen zur Herstellung von Hydrogelen beschrieben, ohne dadurch jedoch die Erfindung einzuschränken.

In einer ersten bevorzugten Ausführungsform wird in Schritt a) ein silikatisches Hydrogel vorgelegt, das dadurch hergestellt wird, daß man eine wäßrige Wasserglaslösung mit Hilfe eines sauren lonenaustauscherharzes, einer Mineralsäure oder einer salzsauren Lösung auf einen pH-Wert s 3 bringt, die dabei entstandene Kieselsäure durch Zugabe einer Base zu einem SiO₂-Gel polykondensiert und das Gel mit Wasser gegebenenfalls elektrolytfrei wäscht. Die Polykondensation zum SiO₂-Gel kann dabei sowohl in einem Schritt als auch mehrstufig erfolgen.

Als Wasserglas wird vorzugsweise Natrium- und/oder Kaliumwasserglas verwendet. Als lonenaustauscherharz wird vorzugsweise ein saures Harz verwendet, wobei insbesondere solche geeignet sind, die Sulfonsäuregruppen enthalten. Falls man Mineralsäuren einsetzt, sind insbesondere Salzsäure und Schwefelsäure geeignet. Falls man salzsaure Lösungen einsetzt, sind vor allem Aluminiumsalze geeignet, insbesondere Aluminiumsulfat und/oder -chlorid. Als Base wird im allgemeinen NH₄OH, NaOH, KOH, Al(OH)₃ und/oder kolloidale Kieselsäure eingesetzt.

Das vorzugsweise aus den oben beschriebenen silikatischen Ausgangsverbindungen hergestellte Hydrogel kann zusätzlich noch zur Kondensation befähigte Zirkonium-, Aluminium-, Zinn- und/oder Titanverbindungen enthalten.

Des weiteren können vor und/oder während der Gelherstellung Trübungsmittel als Zusatzstoffe, insbesondere IR-Trübungsmittel zur Reduktion des Strahlungsbeitrages zur Wärmeleitfähigkeit, wie z.B. Ruß, Titanoxide, Eisenoxide und/oder Zirkonoxide zugesetzt werden.

Darüber hinaus können dem Sol zur Erhöhung der mechanischen Stabilität Fasern zugesetzt werden. Als Fasermaterialien können anorganische Fasern, wie z.B. Glasfasern oder Mineralfasern, organische Fasern, wie z.B. Polyesterfasern, Aramidfasem, Nylonfasem oder Fasern pflanzlichen Ursprungs, sowie Gemische derselben verwendet werden. Die Fasern können auch beschichtet sein, wie z.B. Polyesterfasern, die mit einem Metall wie z.B. Aluminium metallisiert sind.

Die Herstellung des Hydrogels wird im allgemeinen bei einer Temperatur zwischen dem Gefrierpunkt und dem Siedepunkt der Lösung durchgeführt. Dabei kann gegebenenfalls gleichzeitig noch ein Formgebungsschritt, wie z.B. Sprayforming, Extrusion oder Tropfenbildung, durchgeführt werden.

Das erhaltene Hydrogel kann ferner noch einer Alterung unterzogen werden. Diese Alterung kann vor und/oder nach einer oben beschriebenen möglichen Wäsche mit Wasser erfolgen, mit der das Gel im wesentlichen elektrolytfrei gewaschen wird.

Die Alterung geschieht im allgemeinen bei einer Temperatur im Bereich von 20 bis 100°C, vorzugsweise bei 40 bis 100°C und insbesondere bei 80 bis 100°C, und zu einem pH-Wert von 4 bis 11, vorzugsweise 5 bis 9, und insbesondere 5 bis 8. Die Zeit dafür beträgt im allgemeinen bis zu 48 Stunden, vorzugsweise bis zu 24 Stunden und besonders bevorzugt bis zu 3 Stunden.

In einer zweiten bevorzugten Ausführungsform wird in Schritt a) ein silikatisches Hydrogel vorgelegt, das dadurch hergestellt wird, daß man aus einer wäßrigen Wasserglaslösung mit Hilfe mindestens einer organischen und/oder anorganischen Säure über die Zwischenstufe eines Kieselsäuresols ein SiO₂-Gel erhält.

Als Wasserglaslösung wird dabei im allgemeinen eine 6 bis 25 Gew.-%ige (bezogen auf den SiO₂-Gehalt) Natrium- und/oder Kaliumwasserglaslösung verwendet. Bevorzugt ist eine 10 bis 25 Gew.-%ige Wasserglaslösung, besonders bevorzugt eine 10 bis 18 Gew.-%ige Wasserglaslösung.

Ferner kann die Wasserglaslösung auch bezogen auf SiO₂ bis zu 90 Gew.-% zur Kondensation befähigte Zirkonium-, Aluminium-, Zinn- und/oder Titanverbindungen enthalten.

Als Säuren werden im allgemeinen 1 bis 50 Gew.-%ige Säuren verwendet, vorzugsweise 1 bis 10 Gew.-%ige Säuren. Bevorzugte Säuren sind Schwefel-, Phosphor-, Fluß-, Oxal- und Salzsäure. Besonders bevorzugt ist Salzsäure. Es können aber auch Mischungen der entsprechenden Säuren eingesetzt werden.

Neben dem eigentlichen Mischen der Wasserglaslösung und der Säure ist es darüber hinaus auch möglich zunächst einen Teil der Säure in die Wasserglaslösung zu geben, bis ein pH-Wert ≥ 8 erhalten wird und in einem weiteren Schritt den oben genannten pH-Wert des Sols einzustellen und/oder zunächst einen Teil der Wasserglaslösung in die Säure zu geben, bis der pH-Wert ≤ 4 ist und in einem weiteren Schritt den endgültigen pH-Wert einzustellen. Auf diese Weise ist es möglich, das Verhältnis der Stoffströme Wasserglaslösung/Säure über einen sehr breiten Bereich zu variieren.

Nach dem Mischen der beiden Lösungen wird vorzugsweise ein 5 bis 12 Gew.-%iges SiO₂-Gel erhalten. Besonders bevorzugt ist ein 6 bis 9 Gew.%iges SiO₂-Gel.

Um eine möglichst gute Durchmischung der Wasserglaslösung und der Säure zu gewährleisten, bevor sich ein SiO₂-Gel ausbildet, sollten beide Lösungen vorzugsweise unabhängig voneinander eine Temperatur zwischen 0 und 30°C, besonders bevorzugt zwischen 5 und 25°C und insbesondere zwischen 10 und 20°C aufweisen.

Die schnelle Durchmischung der beiden Lösungen erfolgt in dem Fachmann bekannten Vorrichtungen, wie z.B. Rührkessel, Mischdüsen und statische Mischer. Bevorzugt sind halbkontinuierliche oder kontinuierliche Verfahren, wie z.B. Mischdüsen.

Gegebenenfalls kann bei der Herstellung gleichzeitig ein Formgebungsschritt erfolgen, z.B. durch Sprayforming, Extrusion oder Tropfenbildung.

Das erhaltene Hydrogel kann ferner noch einer Alterung unterzogen werden. Dies geschieht im allgemeinen bei 20 bis 100°C, vorzugsweise bei 40 bis 100°C, insbesondere bei 80 bis 100°C und einem pH-Wert von 2,5 bis 11, vorzugsweise 5 bis 8. Die Zeit dafür beträgt im allgemeinen bis zu 12 Stunden, vorzugsweise bis zu 2 Stunden und besonders bevorzugt bis zu 30 Minuten.

Das hergestellte Gel wird vorzugsweise mit Wasser gewaschen, besonders bevorzugt solange bis das verwendete Waschwasser elektrolytfrei ist. Falls eine Alterung des Gels durchgeführt wird, kann das Waschen dabei vor, während und/oder nach der Alterung durchgeführt werden, wobei das Gel in diesem Fall vorzugsweise während oder nach der Alterung gewaschen wird. Zum Waschen kann ein Teil des Wassers durch organische Lösungsmittel ersetzt werden. Der Wassergehalt sollte jedoch vorzugsweise so hoch sein, daß die Salze in den Poren des Hydrogels nicht auskristallisieren.

Um Natrium- und/oder Kaliumionen weitestgehend zu entfemen, kann das Hydrogel vor, während und/oder nach dem Waschen mit Wasser auch mit einer Mineralsäure gewaschen werden. Bevorzugte Mineralsäuren sind dabei ebenfalls die zur Herstellung des Hydrogels als bevorzugt genannten Mineralsäuren.

Des weiteren können dem Wasserglas, der Säure und/oder dem Sol Trübungsmittel als Zusatzstoffe, insbesondere IR-Trübungsmittel, zur Reduktion des Strahlungsbeitrages zur Wärmeleitfähigkeit, wie z.B. Ruß, Titanoxide, Eisenoxide und/oder Zirkonoxide, zugesetzt werden.

Darüber hinaus können dem Wasserglas, der Säure und/oder dem Sol zur Erhöhung der mechanischen Stabilität Fasern zugesetzt werden. Als Fasermaterialien können anorganische Fasern, wie z.B. Glasfasern oder Mineralfasern, organische Fasern, wie z.B. Polyesterfasern, Aramidfasem, Nylonfasem oder Fasern pflanz-lichen Ursprungs, sowie Gemische-derselben verwendet werden. Die Fasern können auch beschichtet sein, wie z.B. Polyesterfasern, die mit einem Metall, wie z.B. Aluminium, metallisiert sind.

In einer dritten bevorzugten Ausführungsform wird in Schritt a) ein silikatisches Hydrogel vorgelegt, das durch Hydrolyse und Polykondensation von Siliciumtetrachlorid (SiCl₄) mit Wasser erhalten wird. Die Hydrolyse und Polykondensation kann dabei sowohl in einem Schritt als auch mehrstufig erfolgen. Bevorzugt ist die Hydrolyse und Polykondensation in einem Schritt.

Das Siliciumtetrachlorid kann dabei sowohl konzentriert als auch verdünnt eingesetzt werden. Zur Verdünnung sind prinzipiell alle mit Siliciumtetrachlorid mischbaren Flüssigkeiten bzw. Lösemittel geeignet. Bevorzugt sind aliphatische oder aromatische Kohlenwasserstoffe, aliphatische Alkohole, Ether, Ester oder Ketone sowie Wasser. Besonders bevorzugte Lösungsmittel sind Methanol, Ethanol, i-Propanol, Aceton, Tetrahydrofuran, Pentan, n-Hexan, n-Heptan, Toluol und Wasser. Ganz besonders bevorzugt ist Aceton, Pentan, n-Hexan, n-Heptan und Wasser. Man kann aber auch Gemische aus den genannten Lösungsmitteln verwenden.

Ferner kann auch das zur Hydrolyse/Polykondensation benötigte Wasser mit mischbaren Lösemitteln versetzt werden. Geeignete Lösemittel sind ebenfalls die oben beschriebenen.

Die Verdünnung des Siliciumtetrachlorids und/oder das zur Hydrolyse/Polykondensation benötigte Wasser sollte im allgemeinen so erfolgen, daß das nach der Reaktion gebildete Hydrogel eine SiO₂-Konzentration im Bereich von 4 bis 12 Gew.%, bevorzugt 4 bis 10 Gew.% und besonders bevorzugt 4 bis 9 Gew.%, aufweist.

Weiterhin können dem Wasser Säuren oder Basen zugesetzt werden. Bevorzugte Säuren hierzu sind Schwefel-, Phosphor-, Fluß-, Oxal-, Essig-, Ameisen- und/oder Salzsäure. Besonders bevorzugt ist Salzsäure und Essigsäure. Ganz besonders bevorzugt ist Salzsäure. Es können aber auch Mischungen der entsprechenden Säuren eingesetzt werden. Als Basen werden im allgemeinen NH₄OH, NaOH, KOH und/oder Al(OH)₃ eingesetzt. Bevorzugt ist Natronlauge.

Ferner können die oben genannten Säuren oder Basen zum Teil oder auch ganz während der Hydrolyse/Polykondensationsreaktion zu dem Reaktionsgemisch zugegeben werden.

Das vorzugsweise aus dem oben beschriebenen Siliciumtetrachlorid hergestellte Hydrogel kann zusätzlich noch zur Kondensation befähigte Zirkonium-, Aluminium-, Zinn- und/oder Titanverbindungen enthalten. Diese Verbindungen können dabei vor oder während der Hydrolyse/Polykondensationsreaktion den oben beschriebenen Ausgangsverbindungen zugesetzt und/oder nach der Gelbildung dem Gel zugesetzt werden.

Des weiteren können vor und/oder während der Gelherstellung Trübungsmittel als Zusatzstoffe, insbesondere IR-Trübungsmittel zur Reduktion des Strahlungsbeitrages zur Wärmeleitfähigkeit, wie z.B. Ruß, Titanoxide, Eisenoxide und/oder Zirkonoxide zugesetzt werden.

Darüber hinaus können den Ausgangsmaterialien zur Erhöhung der mechanischen Stabilität des Gels Fasern zugesetzt werden. Als Fasermaterialien können anorganische Fasern, wie z.B. Glasfasern oder Mineralfasern, organische Fasern, wie z.B. Polyesterfasern, Aramidfasern, Nylonfasern oder Fasern pflanzlichen Ursprungs, sowie Gemische derselben verwendet werden. Die Fasern können auch beschichtet sein, wie z.B. Polyesterfasern, die mit einem Metall, wie z.B. Aluminium, metallisiert sind.

Die Herstellung des Hydrogels wird im allgemeinen bei einer Temperatur zwischen dem Gefrierpunkt und dem Siedepunkt der Reaktanden durchgeführt. Bevorzugt ist eine Temperatur zwischen 0°C und 50°C, besonders bevorzugt ist eine Temperatur zwischen 0°C und 30°C. Dabei kann gegebenenfalls gleichzeitig noch ein Formgebungsschritt, wie z.B. Sprayforming, Extrusion oder Tropfenbildung, durchgeführt werden.

Das erhaltene Hydrogel kann ferner noch einer Alterung unterzogen werden. Die Alterung geschieht im allgemeinen bei einer Temperatur im Bereich von 20 bis 100°C, vorzugsweise bei 40 bis 100°C. Die Zeit dafür beträgt im allgemeinen bis zu 48 Stunden, vorzugsweise bis zu 24 Stunden und insbesondere bis zu 3 Stunden. Diese Alterung kann vor und/oder nach einer möglichen Wäsche des Hydrogels erfolgen. Das Hydrogel kann dabei mit den oben beschriebenen Lösemitteln gewaschen werden, um dadurch z.B. den pH-Wert in den Poren des Hydrogels zu verändern. Bevorzugt ist eine Wäsche mit Wasser.

Ist vor dem Schritt b) in den Poren des Hydrogels weniger als 50 Gew.-% Wasser, so wird mittels einer Wäsche der Wassergehalt der Poren auf mindestens 50 Gew.-% Wasser erhöht.

In Schritt b) wird das aus Schritt a) vorgelegte Hydrogel oberflächenmodifiziert, vorzugsweise oberflächensilyliert. Die Erfindung wird im folgenden anhand der Oberflächensilylierung näher beschrieben, ohne jedoch darauf beschränkt zu sein.

Das Silylierungsmittel kann prinzipiell in jedem Aggregatzustand vorliegen, vorzugsweise jedoch in flüssiger Form und/oder als Gas bzw. Dampf.

Wenn das Silylierungsmittel als Gas und/oder Dampf verwendet wird, liegt die Temperatur des wäßrigen Hydrogels vorzugsweise zwischen 20 und 100°C, besonders bevorzugt zwischen 40 und 100°C und insbesondere zwischen 60 und 100°C. Auch höhere Temperaturen unter Druck sind möglich, damit ein Sieden des Wassers in den Kapillaren des Gels vermieden wird.

Wird das Silylierungsmittel als Flüssigkeit verwendet, liegt die Temperatur des wäßrigen Hydrogels vorzugsweise zwischen 20 und 100°C. Auch höhere Temperaturen unter Druck sind möglich, damit ein Sieden des Wassers in den Kapillaren des Gels vermieden wird.

Wird das Silylierungsmittel als Gas und/oder Dampf verwendet, kann es während der Reaktion in einem Gasstrom oder in einer ruhenden Gasatmosphäre vorliegen.

Die Temperatur des oder der Silylierungsmittel in der Gasphase kann auch durch Druck oder einen zusätzlichen Gasstrom erhöht werden.

Das Silylierungsmittel kann in einer bevorzugten Ausführungsform auch in flüssiger Phase vorgelegt werden. Dabei kann es direkt als flüssige Phase eingesetzt werden und/oder sich durch Kondensation eines eingesetzten Gases auf der Oberfläche des Hydrogels bilden. Dabei kann die Temperatur der flüssigen Phase zwischen 0°C und dem Siedepunkt des/der Silylierungsmittels liegen. Bevorzugt sind Temperaturen zwischen 20 und 100°C. Gegebenenfalls kann auch unter Druck mit höheren Temperaturen gearbeitet werden. Allgemein läuft die Oberflächensilylierung bei höheren Temperaturen beschleunigt ab.

Gemäß einer bevorzugten Ausführungsform werden als Silylierungsmittel Disiloxane der Formel I und/oder Disilazane der Formel II eingesetzt,

R₃Si-O-SiR₃ (I)

R₃Si-N(H)-SiR₃ (II)

wobei die Reste R unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest, vorzugsweise C₁-C₁₈-Alkyl oder C₆-C₁₄-Aryl, besonders bevorzugt C₁-C₆₋Alkyl, Cyclohexyl oder Phenyl, insbesondere Methyl oder Ethyl, bedeuten.

Bevorzugt wird das Hydrogel in Schritt b) mit einem symmetrischen Disiloxan umgesetzt, wobei unter einem symmetrischen Disiloxan ein Disiloxan zu verstehen ist, bei dem beide Si-Atome die gleichen Reste R aufweisen.

Besonders bevorzugt werden Disiloxane eingesetzt, bei denen alle Reste R gleich sind. Insbesondere verwendet man Hexamethyldisiloxan.

Darüber hinaus können alle dem Fachmann bekannten Silylierungsmittel eingesetzt werden, die mit Wasser nicht mischbar sind.

Sind die Silylierungsmittel weitgehend oder ganz wasserunlöslich, wie z.B. Hexamethyldisiloxan (HMDSO), so sind sie von der wäßrigen Phase, die durch das Wasser im und aus dem Gel entsteht, leicht abzutrennen. Dies ermöglicht die einfache Rückführung überschüssiger Reagenzien. Dadurch ist es zum Beispiel durch den Einsatz von Konzentrationen im Überschuß möglich, die Silylierungszeiten zu minimieren.

Die für die eigentliche Silylierungsreaktion notwendigen Silylierungsmittel können auch aus anderen Substanzen, vorzugsweise anderen Silylierungsmitteln, generiert werden. Dies kann kurz vor und/oder während der Silylierung erfolgen. Darüber hinaus kann dies auch erst unmittelbar vor und/oder während der Reaktion an der inneren Oberfläche des Hydrogels erfolgen. Unter dem Begriff Silylierungsmittel wird hier auch eine Mischung von Stoffen verstanden, die zur eigentlichen Silylierung notwendig sind oder prinzipiell in einem chemischen Gleichgewicht miteinander stehen. Beispielsweise kann die Mischung eine als Katalysator wirkende Säure oder Base enthalten.

Bevorzugte Säuren hierzu sind Schwefel-, Phosphor-, Fluß-, Oxal-, Essig-, Ameisen- und/oder Salzsäure. Besonders bevorzugt ist Salzsäure und Essigsäure. Ganz besonders bevorzugt ist Salzsäure. Es können aber auch Mischungen der entsprechenden Säuren eingesetzt werden. Als Basen werden vorzugsweise NH₄OH, NaOH, KOH und/oder Al(OH)₃ eingesetzt, besonders bevorzugt ist Natronlauge. Die Säuren oder Basen können vor, während und/oder nach der Zugabe des oder der Silylierungsmittel zugegeben werden.

Die Oberflächensilylierung in Schritt b) erfolgt unter Anwesenheit von mindestens einem Silylierungsmittel sowie ggfs. mindestens einer Säure oder einer Base die bereits im Hydrogel vorliegt, wobei auch hier die oben genannten Säuren und Basen bevorzugt sind.

Die Säure oder Base kann dabei mittels jedem, dem Fachmann bekannten Verfahren, in dem wäßrigen Gel vorgelegt werden. Bevorzugt ist hier eine Wäsche mit wäßrigen Lösungen der Säuren oder Basen oder eine Behandlung mittels gasförmiger Säuren oder Basen. Besonders bevorzugt liegen die Säuren oder Basen dabei als hochkonzentrierte wäßrige Lösungen vor oder gasförmig, insbesondere als Gase.

Die Konzentrationen, die im Wasser der Naßgele vorliegen, liegen im allgemeinen im Bereich zwischen 5 Gew.-% und der maximal möglichen Konzentration, bevorzugt im Bereich zwischen 10 Gew.-% und der maximal möglichen Konzentration. Im Fall von Salzsäure sind die Konzentrationen größer 5 Gew.-%, vorzugsweise größer 10 Gew.% und besonders bevorzugt größer 15 Gew.-%.

Ferner können auch die Silylierungsmittel zusammen mit Säuren oder Basen verdampft werden und/oder in der Gasphase zusammengebracht und/oder in der flüssigen Phase gemischt werden. Eine Reaktion der Silylierungsmittel mit den Säuren oder Basen vor und/oder während der Verdampfung und/oder in der Gasphase und/oder in der flüssigen Phase ist ebenfalls möglich.

Allgemein läuft die Oberflächenmodifikation bei höheren Konzentrationen an Säuren oder Basen beschleunigt ab.

In einer weiteren besonders bevorzugten Ausführungsform wird das Hydrogel in dem oder den Silylierungsmitteln vorgelegt und anschließend mit mindestens einer Säure und/oder Base versetzt. Dies kann mittels jedem, dem Fachmann bekannten Verfahren, geschehen. Bevorzugt ist eine Behandlung mittels gasförmiger Säuren oder Basen.

Bevorzugte Säuren hierzu sind Schwefel-, Phosphor-, Fluß-, Oxah, Essig-, Ameisen- und/oder Salzsäure. Besonders bevorzugt ist Salzsäure. Es können aber auch Mischungen der entsprechenden Säuren eingesetzt werden. Als Basen werden vorzugsweise Ammoniak, NH₄OH, NaOH. KOH und/oder Al(OH)₃ eingesetzt, besonders bevorzugt ist Ammoniak.

Als Silylierungsmittel können grundsätzlich alle weiter oben genannten Silylierungsmittel eingesetzt werden. Bevorzugte Silylierungsmittel sind Disiloxane, bei denen alle Reste R gleich sind. Insbesondere verwendet man Hexamethyldisiloxan.

Darüber hinaus können alle dem Fachmann bekannten Silylierungsmittel eingesetzt werden.

Während das Hydrogel mit den Säuren und/oder Basen versetzt wird, kommt es gleichzeitig zur eigentlichen Oberflächenmodifikation bzw. Silylierungsreaktion.

Die Konzentrationen an Säuren oder Basen, die im Wasser der Naßgele dabei erreicht werden, liegen im allgemeinen im Bereich zwischen 5 Gew.% und der maximal möglichen Konzentration, bevorzugt im Bereich zwischen 10 Gew.-% und der maximal möglichen Konzentration. Im Fall von Salzsäure sind die Konzentrationen größer 5 Gew.-%, vorzugsweise größer 10 Gew.% und besonders bevorzugt größer 15 Gew.-%.

Im Falle von gasförmigen Säuren oder Basen kann es während des Lösevorganges in dem Wasser des Hydrogels zur Entwicklung von Lösewärme kommen. Bevorzugt führt dies zu einer mehr oder weniger starken Erwärmung des Systems. Bevorzugt hat dies eine beschleunigende Wirkung auf die Oberflächenmodifizierungsreaktion bzw. Silylienrngsreaktion.

Allgemein läuft, insbesondere auch bei der beschriebenen bevorzugten Ausführungsform, die Oberflächenmodifikation bei höheren Konzentrationen an Säuren oder Basen beschleunigt ab.

Dabei ist es möglich, daß durch die Reaktion des oder der Silylierungsmittel mit der Säure oder Base im und/oder außerhalb des Hydrogels eine Verbindung gebildet wird, die ihrerseits mit der inneren Oberfläche des Gels reagieren kann, gegebenenfalls sogar beschleunigend oder autokatalysiert.

Am Beispiel von Hexamethyldisiloxan soll dies kurz erläutert werden, ohne jedoch die Erfindung einzuschränken.

Das wasserunlösliche Hexamethyldisiloxan kann sowohl mit der inneren Oberfläche der Naßgele wie auch z.B. mit HCl im Wasser der Poren des Hydrogels reagieren. Bei der Reaktion mit HCl entsteht Trimethylchlorsilan und Wasser. Das entstehende Trimethylchlorsilan ist nun seinerseits , sowohl im Wasser der Poren als auch im Hexamethyldisiloxan löslich. Es kann einerseits in die Wasserphase hineindiffundieren und mit der inneren Oberfläche des Hydrogels und/oder mit dem Wasser in den Poren reagieren, sowie andererseits ins Hexamethyldisiloxan diffundieren und ebenfalls mit der inneren Oberfläche des Hydrogels reagieren. Dadurch erhöht sich die Konzentration an reaktiven Molekülen in der Wasserphase und im Hexamethyl-disiloxan und die weiter im Inneren der Poren gelegene innere Oberfläche kann schneller vom Silylierungsmittel erreicht werden.

Gemäß einer weiteren bevorzugten Ausführungsform werden als Silylierungsmittel Silane der Formeln R¹₄₋ₙSiClₙ oder R¹₄₋ₙSi(OR²)ₙ mit n = 1 bis 4, vorzugsweise n = 1 bis 3, eingesetzt, wobei R¹ und R² unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest, vorzugsweise C₁-C₁₈-Alkyl oder C₆-C₁₄-Aryl, besonders bevorzugt C₁-C₆-Alkyl, Cyclohexyl oder Phenyl, insbesondere Methyl oder Ethyl, bedeuten. Bevorzugt verwendet man Trimethylchlorsilan. Auch Isopropenoxysilane sowie Silazane sind geeignet.

Die für die eigentliche Silylierungsreaktion notwendigen Silylierungsmittel können auch aus anderen Substanzen, vorzugsweise anderen Silylierungsmitteln, generiert werden. Dies kann kurz vor und/oder während der Silylierung erfolgen. Darüber hinaus kann dies auch erst unmittelbar vor und/oder während der Reaktion an der inneren Oberfläche des Hydrogels erfolgen. Unter dem Begriff Silylierungsmittel wird hier auch eine Mischung von Stoffen verstanden, die zur eigentlichen Silylierung notwendig sind oder prinzipiell in einem chemischen Gleichgewicht miteinander stehen. Beispielsweise kann die Mischung eine als Katalysator wirkende Säure oder Base enthalten.

Bevorzugte Säuren hierzu sind Schwefel-, Phosphor-, Fluß-, Oxal-, Essig-, Ameisen- und/oder Salzsäure. Besonders bevorzugt ist Salzsäure und Essigsäure. Ganz besonders bevorzugt ist Salzsäure. Es können aber auch Mischungen der entsprechenden Säuren eingesetzt werden. Als Basen werden im allgemeinen NH₄OH,

NaOH, KOH und/oder Al(OH)₃ eingesetzt, bevorzugt ist Natronlauge. Die Säuren oder Basen können vor, während und/oder nach der Zugabe des oder der Silylierungsmittel zugegeben werden. Dabei können die Silylierungsmittel zusammen mit den Säuren oder Basen verdampft werden und/oder in der Gasphase zusammengebracht und/oder in der flüssigen Phase gemischt werden. Eine Reaktion der Silylierungsmittel mit den Säuren oder Basen vor und/oder während der Verdampfung und/oder in der Gasphase und/oder in der flüssigen Phase ist ebenfalls möglich. Es ist aber auch möglich, die Säuren oder Basen im Wasser des Hydrogels zu lösen.

Darüber hinaus kann die Silylierung gegebenenfalls mittels spezieller Substanzen bzw. Katalysatoren, beschleunigt bzw. katalysiert werden, beispielsweise mittels mindestens einer Säure oder Base, die im wäßrigen Gel vorliegen. Als Säuren oder Basen sind dabei bevorzugt die weiter oben ebenfalls als bevorzugt erwähnten. Die Säure oder Base kann dabei mittels jedem, dem Fachmann bekannten Verfahren, in dem wäßrigen Gel vorgelegt werden. Bevorzugt ist hier eine Wäsche mit wäßrigen Lösungen der Säuren oder Basen oder eine Behandlung mittels gasförmiger Säuren oder Basen. Besonders bevorzugt liegen die Säuren oder Basen dabei als hochkonzentrierte wäßrige Lösungen vor oder gasförmig, insbesondere als Gase.

Die Konzentrationen der Säuren oder Basen, die im Wasser der Naßgele vorliegen, liegen im allgemeinen im Bereich zwischen 0 Gew.-% und der maximal möglichen Konzentration. Im Fall von Salzsäure sind die Konzentrationen größer 1 Gew.%, bevorzugt größer 5 Gew.-%, besonders bevorzugt größer 10 Gew.-% und insbesondere bevorzugt größer 15 Gew.-%.

Darüber hinaus ist es möglich, daß durch die Reaktion des oder der Silylierungsmittel mit der inneren Oberfläche des Gels und/oder des Wassers im Gel eine Verbindung gebildet wird, wie z.B. eine Säure oder Base, die die weitere Reaktion des oder der Silylierungsmittel beschleunigt oder autokatalysiert.

Am Beispiel von Trimethylchlorsilan soll dies kurz erläutert werden, ohne jedoch die Erfindung einzuschränken.

Trimethylchlorsilan kann sowohl mit der inneren Oberfläche der Naßgele wie auch mit dem Wasser in den Poren der Naßgele reagieren. Bei der Reaktion mit der inneren Oberfläche entsteht als Nebenprodukt HCl. Bei der Reaktion mit Wasser entsteht Hexamethyldisiloxan und HCl. Die entstehende HCl, die in dem verbleibenden Wasser dissoziiert vorliegt, kann nun die weitere Reaktion mit der inneren Oberfläche beschleunigen und darüber hinaus gebildetes Hexamethyldisiloxan wieder zu Trimethylchlorsilan spalten. Dadurch erhöht sich die Konzentration an reaktiven Molekülen.

Spalten die verwendeten Silylierungsmittel bei der Reaktion mit der inneren Oberfläche der Gele Anionen ab, die zur Bildung von Säuren oder Basen führen, so führt dies zu einer Erhöhung der Säure- bzw. Basenkonzentration im Naßgel.

Weiterhin ist ein Trocknen der äußeren Oberfläche der Naßgelpartikel vor der eigentlichen Silylierung möglich. Dies kann nach allen dem Fachmann bekannten Trocknungsmethoden erfolgen, vorzugsweise bei Temperaturen von -30 bis 200°C, besonders bevorzugt 0 bis 200°C, sowie Drücken vorzugsweise von 0,001 bis 20 bar, besonders bevorzugt 0,01 bis 5 bar, insbesondere 0,1 bis 2 bar, beispielsweise durch Strahlungs-, Konvektions- und/oder Kontakttrocknung. Bevorzugt ist eine Trocknung der äußeren Oberfläche mittels mindestens einem Gas. Dabei sind alle chemisch inerten Gase bevorzugt. Besonders bevorzugt ist Stickstoff und Argon, insbesondere Stickstoff.

Weiterhin kann diese Trocknung auch mit mindestens einem Gas erfolgen, das durch Adsorption oder Reaktion mit dem Wasser in den Poren zu einer pH-Wert-Änderung in den Poren des Naßgels führt, wie z.B. Salzsäure oder Ammoniak. Bevorzugt sind hier Gase, die zu pH-Werten kleiner 7 führen. Besonders bevorzugt ist HCl-Gas. Es können aber auch Mischungen mit chemisch inerten Gasen verwendet werden.

Erwärmt sich das Naßgel dabei, so kann es zu einem Sieden in den Poren kommen. Dies kann gegebenenfalls durch geeignete Methoden, wie z.B. Kühlen oder höheren Druck, vermieden werden.

Bei der Verwendung von z.B. HCl-Gas kommt es zu einem Schrumpfen des Naß geles im Bereich von 0 bis 40 Vol.-%, bevorzugt 0 bis 30 Vol.-% und besonders bevorzugt von 5 bis 20 Vol.-%. Dadurch wird die Menge an Wasser bzw. organischen Substanzen, die sich vor und/oder während und/oder nach der Silylierung und/oder vor der späteren Trocknung in den Poren befinden bezüglich der Ausgangsmenge reduziert, was eine Verringerung der zu verwendenden Menge an Substanzen vor und/oder während und/oder nach der Silylierung bedeutet und bei der anschließenden Trocknung zu einer Verringerung des zu verdampfenden Lösungsmittels aus den Poren führt, wodurch sich der Aufwand beispielsweise hinsichtlich Gerätegröße und Energie deutlich reduziert.

Die Trocknung der äußeren Oberfläche der Naßgelpartikel kann darüber hinaus auch durch Verdrängung des Wassers mittels eines im wesentlichen wasserunlöslichen Silylierungsmittels, wie z.B. Hexamethyldisiloxan (HMDSO), erfolgen.

Zusätzlich zum Silylierungsmittel kann auch mindestens ein Trägergas bzw. Trägergasstrom verwendet werden. Bevorzugt sind dabei chemisch inerte Gase. Besonders bevorzugt ist Stickstoff und Argon, insbesondere Stickstoff. Die Temperaturen des Trägergases liegen dabei im allgemeinen zwischen 20 und 400°C.

Die Silylierung wird so lange durchgeführt, bis der gewünschte Belegungsgrad der inneren Oberfläche des Hydrogels erreicht ist. Maximal können jedoch nur alle chemisch erreichbaren Oberflächengruppen modifiziert werden.

Ferner kann durch die Wahl der Parameter Temperatur im und um das Gel, Temperatur, Konzentration und Art des oder der Silylierungsmittel und der Strömungsgeschwindigkeit sowie gegebenenfalls der Temperatur und der Strömungsgeschwindigkeit des oder der Trägergase, der Grad des Austausches des Wassers in den Poren gegen das oder die Silylierungsmittel sowie der Grad der Trocknung während der Silylierung eingestellt werden.

Durch eine längere Silylierung kann ein vollständiger oder teilweiser Austausch des Wassers in den Poren des Gels gegen das oder die Silylierungsmittel erfolgen.

Wird die Silylierung beispielsweise so durchgeführt, daß ein Teil des Wassers in den Poren des Hydrogels mit dem verwendeten Silylierungsmittel (z.B. Trimethylchlor silan) zu einer wasserunlöslichen Verbindung (z.B. Hexamethyldisiloxan) reagiert, so wird durch das Molvolumen der gebildeten Verbindung notwendigerweise mindestens ein Teil des Wassers aus den Poren verdrängt.

Dies führt während der Silylierung der inneren Oberfläche des Netzwerkes zu einem teilweisen oder vollständigen Austausch der Flüssigkeit in den Poren des Hydrogels durch ein wasserunlösliches Medium. Diese wasserunlöslichen Medien sind von der wäßrigen Phase, die durch das Wasser im und aus dem Gel entsteht, leicht abzutrennen. Dies ermöglicht die einfache Rückführung überschüssiger Reagenzien. Dadurch ist es z.B. durch den Einsatz von Konzentrationen im Überschuß möglich, die Silylierungszeiten zu minimieren.

Die durch die Reaktion des Wassers im Hydrogel mit dem oder den Silylierungsmitteln gebildeten Substanzen können gegebenenfalls auf einfachem Wege wieder zu einem oder mehreren Silylierungsmittein recycliert werden. Dies soll am Beispiel TMCS als Silylierungsmittel kurz erläutert werden.

TMCS reagiert mit dem Wasser im Hydrogel unter Bildung von HMDSO und HCl. HMDSO und HCl können nach Abtrennung unter geeigneten Bedingungen wieder zu TMCS und Wasser reagieren.

Der Vorteil ist eine Verringerung von anfallenden Reststoffen im vorliegenden Verfahren.

Vor Schritt c) kann das silylierte Gel gegebenenfalls noch mit einem protischen oder aprotischen Lösungsmittel gewaschen werden, bis unumgesetztes Silylierungsmittel im wesentlichen entfernt ist (Restgehalt ≤ 0,1 Gew.-%) und der Wassergehalt des Gels vorzugsweise < 5 Gew.-%, besonders bevorzugt < 3 Gew.-% und insbesondere < 1 Gew.-% ist. Als Lösungsmittel werden im allgemeinen aliphatische Alkohole, Ether, Ester oder Ketone sowie aliphatische oder aromatische Kohlenwasserstoffe verwendet. Bevorzugte Lösungsmittel sind Methanol, Ethanol, Aceton, Tetrahydrofuran, Essigsäureethylester, Dioxan, Pentan, n-Hexan, n-Heptan und Toluol. Man kann aber auch Gemische aus den genannten Lösungsmitteln verwenden.

Ferner kann das Gel mit den verwendeten Silylierungsmitteln gewaschen werden. Bevorzugt ist hier Trimethylchlorsilan, Trimethylsiloxan, Hexamethyldisilazan und Hexamethyldisiloxan. Besonders bevorzugt ist Hexamethyldisiloxan. Es können aber auch Gemische der genannten Silylierungsmittel verwendet werden.

Grundsätzlich ist es für die anschließende, vorzugsweise unterkritische Trocknung günstig, wenn in den Poren des Gels ganz oder teilweise Lösungsmittel oder Lösungsmittelgemische enthalten sind, die eine niedrige Oberflächenspannung aufweisen. Bevorzugt ist Hexamethyldisiloxan.

In Schritt c) wird das silylierte und gegebenenfalls gewaschene Gel vorzugsweise unterkritisch getrocknet, vorzugsweise bei Temperaturen von -30 bis 200°C, besonders bevorzugt 0 bis 150°C, sowie Drücken vorzugsweise von 0,001 bis 20 bar, besonders bevorzugt 0,01 bis 5 bar, insbesondere 0,1 bis 2 bar, beispielsweise durch Strahlungs-, Konvektions- und/oder Kontakttrocknung. Die Trocknung wird vorzugsweise so lange fortgeführt, bis das Gel einen Lösungsmittel-Restgehalt von weniger als 0,1 Gew.-% aufweist. Die bei der Trocknung erhaltenen Aerogele sind je nach Modifizierungsgrad ganz oder teilweise hydrophob. Die Hydrophobizität ist dauerhaft.

Das in Schritt b) erhaltene Gel kann auch überkritisch getrocknet werden. Dies erfordert entsprechend dem jeweiligen Lösungsmittel höhere Temperaturen als 200°C und/oder höhere Drücke als 20 bar. Dies ist ohne weiteres möglich, ist aber mit erhöhtem Aufwand verbunden.

In einer weiteren Ausführungsform kann das Gel je nach Anwendung vor der Silylierung im Schritt b) noch einer Netzwerkverstärkung unterworfen werden. Dies kann dadurch geschehen, daß man das erhaltene Gel mit einer Lösung eines zur Kondensation befähigten Orthosilikates der Formel R¹₄₋ₙSi(OR²)ₙ, vorzugsweise ein Alkyl- und/oder Arylorthosilikat, wobei n = 2 bis 4 ist und R¹ und R² unabhängig voneinander Wasserstoffatome, lineare oder verzweigte C₁-C₆-Alkyl-, Cyclohexyl- oder Phenyl-Reste sind, oder mit einer wäßrigen Kieselsäure-Lösung umsetzt.

In einer weiteren Ausführungsform kann das Gel nach der formgebenden Polykondensation und/oder jedem nachfolgenden Verfahrensschritt nach dem Fachmann bekannten Techniken, wie z.B. Mahlen, zerkleinert werden.

Überraschend wurde gefunden, daß in einer weiteren bevorzugten Ausführungsform von Schritt b) die Oberflächenmodifizierung bzw. -silylierung unter Anwesenheit von mindestens einer ionischen und/oder nichtionischen Verbindung im Naßgel erfolgen kann. Bevorzugte gelöste ionische Verbindungen sind z.B. Natriumchlorid, Kaliumchlorid, Calciumchlorid, Natriumsulfat, Kaliumsulfat oder Aluminiumnitrat. Besonders bevorzugt sind Salze, die bei der Umsetzung von Wasserglas mit mindestens einer Mineralsäure entstehen, wie z.B. Natriumchlorid. Die Konzentrationen liegen dabei im allgemeinen zwischen 0 Gew.-% und einer gesättigten Lösung, bevorzugt zwischen 0 Gew.-% und einer halbgesättigten Lösung, besonders bevorzugt zwischen 0 Gew.-% und 10 Gew.-%.

Bevorzugte nichtionische Verbindungen sind z.B. Ruß, Titanoxide, Eisenoxide und/oder Zirkonoxide.

Im folgenden wird diese Verfahrensvariante anhand von gelöstem Natriumchlorid in den Poren des Hydrogels beschrieben, ohne jedoch darauf beschränkt zu sein.

Die Konzentrationen des im Wasser in den Gelporen gelösten Natriumchlorids liegen dabei allgemein zwischen 0 Gew.-% und einer gesättigten Lösung, bevorzugt zwischen 0 Gew.-% und einer 20 Gew.-%igen Lösung, besonders bevorzugt zwischen 0 Gew.% und einer 10 Gew.-%igen Lösung, insbesondere zwischen 0 Gew.-% und einer 8 Gew.-%igen Lösung.

Die Oberflächensilylierung im Schritt b) erfolgt wie weiter oben beschrieben. Je nach genauer Versuchsführung kann es zu einem teilweisen Auskristallisieren von Natriumchlorid außerhalb und/oder innerhalb des Naßgels kommen.

Das außerhalb vom Naßgel auskristallisierende Salz kann nach dem Fachmann bekannten Methoden, wie z.B. Fittration, vom Gel getrennt werden. Dabei kann das silylierte Gel gegebenenfalls noch mit einem protischen oder aprotischen Lösungsmittel gewaschen werden, bis das außerhalb vom Naßgel auskristallisierte Natriumchlorid im wesentlichen entfernt ist. Als Lösungsmittel werden im allgemeinen aliphatische Alkohole, Ether, Ester oder Ketone sowie aliphatische oder aromatische Kohlenwasserstoffe oder Wasser verwendet. Bevorzugte Lösungsmittel sind Methanol, Ethanol, Aceton, Tetrahydrofuran, Essigsäureethylester und Wasser. Besonders bevorzugt ist Wasser. Das Wasser kann auch Salze enthalten, bevorzugt sind solche Salze, die auch vom Aerogel gewaschen werden sollen. Man kann aber auch Gemische aus den genannten Lösungsmitteln verwenden.

Ferner kann das Gel mit den verwendeten Silylierungsmitteln gewaschen werden. Bevorzugt ist hier Trimethylchlorsilan, Trimethylsiloxan, Hexamethyldisilazan und Hexamethyldisiloxan. Besonders bevorzugt ist Hexamethyldisiloxan. Es können aber auch Gemische der genannten Silylierungsmittel verwendet werden.

Weiterhin ist zur Entfernung von auskristallisiertem Natriumchlorid von der äußeren Oberfläche der Gelpartikel während und/oder nach der Silylierung Ultraschall geeignet.

Wenn es zu einer teilweisen Auskristallisation von Natriumchlorid innerhalb des Gels kommt, so führt dies überraschenderweise vor, während und/oder nach der Trocknung nicht zu einer Zerstörung der Gelpartikel auf makroskopischer Ebene.

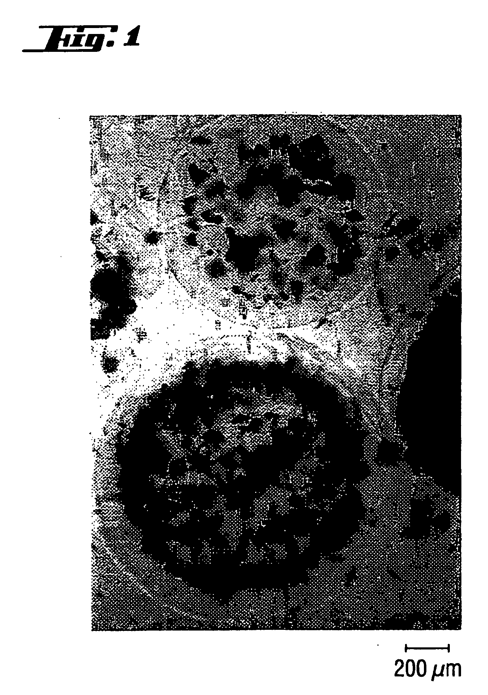

Ferner sind die vorhandenen Natriumchloridkristalle bevorzugt in einer inneren Schale und/oder im Kembereich der Aerogel-Partikel lokalisiert. Auffallend ist weiterhin, daß sich im äußeren Bereich der Aerogel-Partikel keine NaCl Kristalle befinden (Figur 1).

In Figur 1 stellen die hellen Bereiche kugelförmige Aerogelmonolithe dar, in welchen die NaCl-Kristalle in dunkler Form erscheinen (Lichtmikroskopische Aufnahme; Maßstab 1 cm entspricht 200 µm).

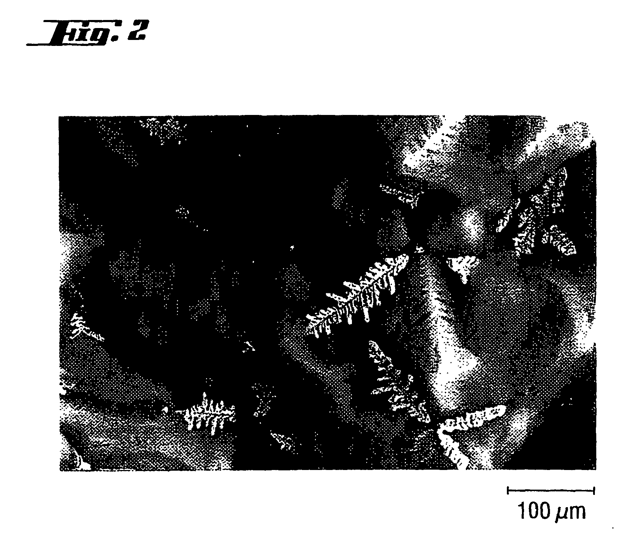

Betrachtet man die NaCl Kristalle in Aerogel-Monolithen mittels eines rasterelektronischen Mikroskops (REM), so erkennt man deutlich deren dendritische Form und Struktur (Figur 2) in einer Größenordnung von etwa 20 bis 200 µm (Maßstab: 1 cm entspricht 50 µm). Eine Untersuchung mittels Scanning Transmission Electron Microscopy (STEM) in Kombination mit energiedispersen X-ray Analyse (EDX) zeigt, daß keine SiO₂ Partikel in die Kristalle eingebaut sind. Da sich dendritische Kristallformen im allgemeinen nur ausbilden, wenn das Kristallwachstum in seiner räumlichen Ausbreitung nicht gestört wird, muß angenommen werden, daß während der Kristallisation entsprechend große Poren vorgelegen haben. Diese Poren sind aber im getrockneten oberflächensilylierten Aerogel nur indirekt durch das Vorhandensein solcher Kristalle nachweisbar. Wird die Silylierung ohne gelöstes NaCl im Naßgel durchgeführt, so können solche Poren nicht nachgewiesen werden. Ferner können solche Poren auch im Naßgel nicht nachgewiesen werden. Poren dieser Größe scheinen sich also im Verlaufe der Silylierung reversibel zu bilden, wenn keine Salze auskristallisieren können. Kristallisieren Salze aus, ist die Ausbildung solcher Poren nicht reversibel.

Eine Ausbildung solch großer Poren (bis mehrere hundert µm groß) kann den normalerweise sehr langsamen Austausch von Stoffen in den nur wenige Nanometer großen Poren der Naßgele stark beschleunigen. Dadurch ist eine deutlich schnellere Silylierung und ein deutlich schnellerer Lösemittelaustausch, als aus dem Stand der Technik bekannt, möglich.

Darüber hinaus kann durch die Konzentration an Natriumchlorid im Naßgel die innere Oberfläche reduziert werden. Dies führt insgesamt zu einer Reduzierung der organischen Oberflächengruppen pro Masse oder Volumen Aerogel, ohne daß damit jedoch notwendigerweise eine Reduzierung des Belegungsgrades einhergehen muß (siehe Tabelle 1, Beispiel 7d, Versuch 1 bis 8).

Nach der Trocknung wie im Schritt c) beschrieben, erhält man Aerogele mit einem Natriumchloridgehalt zwischen 0 Gew.-% und 50 Gew.-%, bevorzugt zwischen 0 Gew.-% und 20 Gew.-%, besonders bevorzugt zwischen 0 Gew.-% und 10 Gew.-%.

Darüber hinaus sind die Aerogel-Partikel je nach Silylierungsgrad ganz oder teilweise hydrophob. Die Hydrophobizität ist dauerhaft.

Die nach den oben beschriebenen erfindungsgemäßen Verfahren hergestellten Aerogele sind je nach Modifizierungsgrad ganz oder teilweise hydrophob. Die Hydrophobizität ist dauerhaft. Die erhaltenen Aerogele tragen verfahrensbedingt auf ihrer inneren Oberfläche nur Si-R und/oder Si-OH-Gruppen, jedoch keine Si-OR-Gruppen.

Die oben beschriebenen Hydrogele haben verfahrensgemäß auf ihrer inneren Oberfläche Si-OH-Gruppen. Durch die besonders bevorzugte erfindungsgemäße organische Modifizierung mittels Trialkylchlorsilanen und/oder Hexalkyldisiloxanen erfolgt eine vollständige oder teilweise Umsetzung der Si-OH Gruppen auf der inneren Oberfläche zu Si-O-Si(R)₃-Gruppen. Da während des gesamten Verfahrens, im Gegensatz zum Stand der Technik, das Naßgel nicht mit reaktiven Lösungsmitteln wie z.B. Alkoholen (Methanol, Ethanol, Isopropanol, etc.), Ketonen (Aceton, etc.), Ethern (Dimethoxyethan, etc.) oder Tetrahydrofuran in Berührung kommt, ist eine Bildung von Si-OR-Gruppen auf der inneren Oberfläche der Gele nicht möglich.

Die Gegenwart von organischen Lösungsmitteln während der eigentlichen Silylierung führt zu einer Anlagerung von organischem Lösungsmittel an die reaktionsfähigen OH-Gruppen des Gels. Dies verhindert eine mögliche vollständige Umsetzung der OH-Gruppen mit dem jeweiligen Silylierungsmittel.

Wird, wie in der vorliegenden Erfindung, auf die Verwendung von organischen Lösungsmitteln vollständig verzichtet, können alle für das verwendete Silylierungsmittel räumlich erreichbaren Si-OH Gruppen mit dem Silylierungsmittel reagieren. Dadurch kann ein sehr hoher Belegungsgrad der inneren Oberfläche, der nahe dem theoretisch möglichen Belegungsgrad liegt, erreicht werden. Dies kann ebenfalls dadurch unterstützt werden, daß die hier beschriebenen Methoden der Silylierung es im Gegensatz zum Stand der Technik ermöglichen, einen großen Überschuß an reaktiven Silylierungsmittel in den Poren des Hydrogels vorzulegen.

Dadurch kann das Gleichgewicht der Silylierungsreaktion ganz auf die Seite der modifizierten Oberfläche verschoben werden.

Unter dem Belegungsgrad wird in dieser Anmeldung die Anzahl an organischen Oberflächengruppen pro Quadratnanometer innerer Oberfläche der Aerogele verstanden.

Im weiteren Verlauf wird der Belegungsgrad am Beispiel der mit Trimethylsilylgruppen modifizierten Aerogele beschrieben, ohne dadurch jedoch eingeschränkt zu werden.

Bei der Oberflächenmodifikation von porösen SiO₂-Materialien mit Trimethylchlorsilan kann sich bei ebener Oberfläche theoretisch maximal ein Belegungsgrad mit Trimethylsilylgruppen (TMS) von 2,8 nm⁻² ergeben. Dies läßt sich aus dem sterischen Anspruch der TMS Einheiten, der in der Literatur als "umbrella effect" beschrieben wird, errechnen. Aus den Si-C- (0,189 nm) und den C-H- (0,108 nm) Bindungslängen sowie dem van der Waals Radius des TMS-Moleküls ergibt sich ein Platzbedarf von etwa 0,36 nm² pro TMS-Molekül. Dies entspricht umgerechnet dem Belegungsgrad von 2,8 TMS-Molekülen pro nm² (W. Urbaniak, F. Janowski, B. Marciniec, F. Wolf, React.Kinet. Catal. Lett. 1987, 34, 129; K.K. Unger, Journal of Chromatography Library 1979, 16, 64; E. V. Broun, A. Ya. Korolev, L. M. Vinogradova, R. V. Artamonova, T. V. Men'kova, Russ. J. Phys. Chem. 1970, 44, 442.)

In der Tabelle 1 sind die Belegungsgrade für Aerogele aufgelistet, die nach dem erfindungsgemäßen Verfahren hergestellt wurden.

In der Tabelle 2 sind die Belegungsgrade für Aerogele aufgelistet, die nach dem aus Stand der Technik bekannten Verfahren hergestellt wurden.

Die Belegungsgrade sind dabei mittels der folgenden Formel berechnet:
Belegungsgrad = ([C]/BET°) * K; Einheit: [nm⁻²],
K = 6.022*10²³/100*12*3*10¹⁸ = 167.28; Einheit: [g-¹]
[C]: C-Gehalt in Gew.-%
[BET]: BET-Oberfläche; Einheit: [m²/g]

Aufgrund der verwendeten Meßmethoden sind die Werte für die Belegungsgrade mit Fehlern von maximal 10% behaftet.

**Tabelle 1 Belegungsgrade für erfindungsgemäß hergestellte Aerogele**

| Beispiel | C-Gehalt [Gew.-%] | BET-Oberfläche [m²/g] | Belegungsgrad [nm⁻²] | NaCl-Gehalt [Gew.-%] |
|---|---|---|---|---|
| 2n | 12.4 | 684 | 3.0 | -- |
| 3c | 11.7 | 683 | 2.9 | -- |
| 4f | 11.5 | 730 | 2.6 | -- |
| 5a, Vers. 1 | 12 | 732 | 2.7 | -- |
| 5a, Vers. 2 | 11.7 | 683 | 2.9 | -- |
| 5a, Vers. 3 | 11.6 | 701 | 2.8 | -- |
| 5b | 12.0 | 732 | 2.7 | -- |
| 7a, Vers. 1 | 10.4 | 614 | 2.8 | 7.1 |
| 7a, Vers. 2 | 9.4 | 560 | 2.8 | 6.9 |
| 7a, Vers. 3 | 8.9 | 568 | 2.6 | 6.9 |
| 7b | 9.3 | 587 | 2.7 | 4.3 |
| 7c | 9.0 | 558 | 2.7 | 6.4 |
| 7d, Vers. 1 | 9.2 | 549 | 2.8 | 8.4 |
| 7d, Vers. 2 | 7.1 | 422 | 2.8 | 18.0 |
| 7d, Vers. 3 | 6.9 | 431 | 2.7 | 11.4 |
| 7d, Vers. 4 | 7.8 | 431 | 3.0 | 12.8 |
| 7d, Vers. 5 | 6.8 | 425 | 2.7 | 18.6 |
| 7d, Vers. 6 | 7.3 | 431 | 2.8 | 16.3 |
| 7d, Vers. 7 | 7.0 | 405 | 2.9 | 20.1 |
| 7d, Vers. 8 | 9.6 | 570 | 2.8 | 5.6 |
| 8, Vers. 1 | 11.7 | 684 | 2.9 | - |
| 8, Vers. 2 | 11.0 | 606 | 3.0 | - |
| 8, Vers. 3 | 11.7 | 695 | 2.8 | - |
| 8, Vers. 4 | 11.0 | 630 | 2.9 | - |
| 9a | 12.0 | 673 | 3.0 | - |
| 9b | 9.5 | 488 | 3.3 | - |

**Tabelle 2 Belegungsgrade für nach dem Stand der Technik hergestellten Aerogele**

| Vergleichsbeispiel | C-Gehalt [Gew.-%] | BET-Oberfläche [m²/g] | Belegungsgrad [nm⁻²] |
|---|---|---|---|
| 1 | 5.9 | 416 | 2.4 |
| 2, Vers. 1 | 9.6 | 689 | 2.3 |
| 2, Vers. 2 | 8.5 | 602 | 2.4 |
| 3, Vers. 1 | 6.9 | 719 | 1.6 |
| 3, Vers. 2 | 3.9 | 374 | 1.7 |
| 3, Vers. 3 | 4.0 | 375 | 1.8 |
| 3, Vers. 4 | 4.9 | 442 | 1.9 |
| 3, Vers. 5 | 7.0 | 615 | 1.9 |
| 3, Vers. 6 | 5.8 | 653 | 1.5 |
| 4, Vers. 1 | 4.3 | 365 | 2.0 |
| 4, Vers. 2 | 5.8 | 437 | 2.2 |
| 4, Vers. 3 | 4.3 | 353 | 2.0 |
| 4, Vers. 4 | 6.5 | 503 | 2.2 |
| 4, Vers. 5 | 5.7 | 489 | 2.0 |
| 4, Vers. 6 | 5.0 | 440 | 1.9 |
| 4, Vers. 7 | 4.6 | 414 | 1.9 |
| 4, Vers. 8 | 3.7 | 375 | 1.7 |
| 4, Vers. 9 | 4.0 | 366 | 1.8 |
| 4, Vers. 10 | 4.5 | 357 | 2.1 |
| 4, Vers. 11 | 4.9 | 407 | 2.0 |
| 4, Vers. 12 | 4.6 | 404 | 1.9 |
| 4, Vers. 13 | 5.6 | 442 | 2.1 |
| 4, Vers. 14 | 4.9 | 420 | 2.0 |
| 4, Vers. 15 | 5.7 | 419 | 2.3 |
| 4, Vers. 16 | 5.6 | 409 | 2.3 |
| 4, Vers. 17 | 5.6 | 435 | 2.2 |
| 4, Vers. 18 | 4.6 | 391 | 2.0 |
| 4, Vers. 19 | 7.1 | 536 | 2.2 |
| 4, Vers. 20 | 2.7 | 721 | 0.6 |
| 4, Vers. 21 | 5.9 | 546 | 1.8 |
| 4, Vers. 22 | 5.2 | 407 | 2.1 |
| 4, Vers. 23 | 6.4 | 451 | 2.4 |
| 4, Vers. 24 | 5.6 | 427 | 2.2 |
| 4, Vers. 25 | 5.7 | 417 | 2.3 |
| 4, Vers. 26 | 5.3 | 392 | 2.3 |
| 5 | 10.7 | 771 | 2.3 |

Die innere Oberfläche wird dabei mittels Stickstoffadsorption nach Brunauer, Emmert und Teller (BET) bestimmt. Da die BET Methode je nach Meßparametem zu unterschiedlichen Ergebnissen führen kann, muß die Oberfläche nach einer festgelegten Methode bestimmt werden. Alle in der vorliegenden Schrift angegebenen BET Oberflächen sind wie folgt bestimmt worden.

Die BET Meßwerte wurden mittels einem BET-Meßgerät ASAP 2010 der Firma Micromeritics nach dem Mehrpunkt BET-Meßverfahren DIN 66131 bestimmt. Die verwendete Probenmenge betrug ca. 0,2 g Aerogel. Zur Probenvorbereitung wurden die Aerogele bei 110°C mindestens 17 Stunden unter Vakuum (10⁻² bis 10⁻³ mbar) entgast. Die Messung erfolgte bei 77° Kelvin, der Temperatur von flüssigem Stickstoff. Die spezifische Oberfläche wurde aus 5 Meßpunkten innerhalb des relativen Druckbereiches (P/P₀) von 0,05 bis 0,25 der Adsorptionsisotherme bestimmt. Dabei wurde als Platzbedarf für ein N₂-Motekül 0.162 nm² angenommen. Die Meßpunkte wurden bei relativen Drücken von 0,05; 0,1; 0,15; 0,2 und 0,25 aufgenommen, wenn die Druckschwankungen des Gleichgewichtdruckes maximal ± 2% betrugen. Die verwendete Meßmethode zur Bestimmung der inneren Oberfläche nach BET ergab bei einer standardisierten Probe einen maximalen Fehler von 5% (Zertifiziertes Referenzmaterial, Aluminiumoxid Typ 150, CRM, BAM-PM-104, Bundesanstalt für Materialforschung und Prüfung, Berlin).

Als Ergebnis kann man einen deutlich höheren Belegungsgrad im Bereich von 2,6 bis 3,3 TMS Einheiten pro nm² für die erfindungsgemäß hergestellten Aerogele feststellen (siehe Tabelle1). Die nach dem Stand der Technik erreichbaren Belegungsgrade liegen im Bereich von 0,6 bis 2,4.

Die erfindungsgemäßen Aerogele finden insbesondere Verwendung als Wärmeisolationsmaterialien.

Eine weitere Aufgabe der vorliegenden Erfindung war es, ein Verfahren zur Herstellung von organisch modifizierten Lyogelen bereitzustellen, bei dem man ein gängiges Mittel zur Oberflächenmodifikation verwendet, und auf einen Lösungsmittelaustausch des Wassers gegen ein anderes Lösungsmittel verzichtet werden kann.

Diese Aufgabe wird überraschenderweise gelöst durch ein Verfahren zur Herstellung von organisch modifizierten Lyogelen, bei dem man
a) ein Hydrogel vorlegt und
b) das in Schritt a) erhaltene Hydrogel unter Verzicht eines Lösungsmittelaustausches des Wassers gegen ein anderes Lösungsmittel oberflächenmodifiziert.

Vorzugsweise wird das in Schritt a) erhaltene Hydrogel oberflächensilyliert.

Die oben zur Herstellung von Aerogelen beschriebene Trocknung der Gele entfällt bei der Herstellung der entsprechenden Lyogele.

Die hergestellten Lyogele weisen die gleichen Merkmale bezüglich ihrer inneren Oberfläche, ihrer Hydrophobizität und ihrem Belegungsgrad auf wie die getrockneten Aerogele. Unterschiede bestehen lediglich hinsichtlich des in den Poren befindlichen Mediums.

Das nach der Oberflächenmodifikation bzw. -silylierung in den Poren befindliche Medium kann gegen ein beliebiges anderes Medium ausgetauscht werden. Bevorzugt ist ein hydrophiles Medium wie z.B. Ethanol oder Wasser. Besonders bevorzugt ist Wasser. Dies kann z.B. im Falle von Wasser wie folgt geschehen.

Das ursprüngliche Medium in den Poren wird bei Mischbarkeit mit Waser direkt oder bei geringer Mischbarkeit bzw. Unmischbarkeit mit Wasser mit Hilfe eines Lösungsmittels, wie z.B. Alkohole, gegen Wasser ganz oder teilweise ausgetauscht. Dies ist selbstverständlich auch mit auf anderem Wege oberflächenmodifizierten Lyogelen möglich.

Bevorzugt ist eine Wasserkonzentration in den Poren der Lyogele zwischen 50 und 100 Gew.-%, vorzugsweise 50 bis 80 Gew.-%.

Dadurch ergeben sich z.B. hydrophobe, wasserhaltige Naßgele für verschiedenste Anwendungen.

Das erfindungsgemäße Verfahren zur Herstellung von Aerogelen wird im folgenden anhand von Ausführungsbeispielen näher beschrieben, ohne dadurch beschränkt zu werden.

### Beispiel 1

424 g einer auf 10°C gekühlten 7,5%igen HCl-Lösung werden tropfenweise mit 712 g einer auf 10°C gekühlten Natriumwasserglaslösung (mit einem Gehalt von 13 Gew.- % SiO₂ und einem Na₂O:SiO₂ Verhältnis von 1:3,3) versetzt. Dabei stellt sich ein pH-Wert von 4,7 ein. Das nach einigen Sekunden gebildete Hydrogel wird 30 Minuten bei 85°C gealtert. Anschließend wird es mit 31 warmem Wasser gewaschen.
a) 100 g Hydrogel werden mit etwas wäßriger HCl leicht angesäuert (etwa 5 Gew.%ige HCl im Wasser des Hydrogels) und mit 200 g Hexamethyldisiloxan und 50 g Ethanol als Lösungsvermittler versetzt. Nach 5 Stunden rühren bei Raumtemperatur wurden 30 ml wäßrige Phase abgetrennt. Nach weiteren 24 Stunden rühren bei Raumtemperatur konnten noch einmal 10 ml wäßrige Phase abgetrennt werden. Nach Zugabe von weiteren 20 ml Ethanol als Lösungsvermittler und 3 Tage rühren bei Raumtemperatur konnten noch einmal 45 ml wäßrige Phase abgetrennt werden. Anschließend erfolgt die Trocknung des Gels in einem heißen Stickstoffstrom (1500 l/h, 200°C) für eine Stunde. Das so erhaltene Aerogel hat eine Dichte von 0,14 g/cm³. Die spezifische Oberfläche nach BET liegt bei 665 m²/g. Der λ-Wert liegt bei 0,016 W/mK.
b) 100 g Hydrogel werden mit etwas wäßriger HCl leicht angesäuert (etwa 2 Gew.-%ige HCl im Wasser des Hydrogels) und mit 200 g Hexamethyldisiloxan (HMDSO) versetzt. Nach 10 Tagen bei Raumtemperatur bildet sich eine wäßrige Phase unterhalb der HMDSO Phase. Anschließend erfolgt die Trocknung des Gels in einem heißen Stickstoffstrom (1500 l/h, 200°C) für eine Stunde. Das so erhaltene Aerogel hat eine Dichte von 0,13 g/cm³. Die spezifische Oberfläche nach BET liegt bei 680 m²/g. Der λ-Wert liegt bei 0,015 W/mK.

### Beispiel 2

2 I einer Natriumwasserglaslösung (SiO₂-Gehalt von 6 Gew.-% und Na₂O:SiO₂ Verhältnis von 1:3,3) werden über eine ummantelte Glaskolonne (Länge = 100 cm, Durchmesser = 8 cm), die mit 4 I eines sauren Ionenaustauscherharzes (Styroldivinylbenzol-Copolymer mit Sulfonsäuregruppen, handelsüblich unter dem Namen ®Duolite C 20) gefüllt ist, geleitet (ca. 70 ml/min). Die Kolonne wird bei einer Temperatur von etwa 7°C betrieben. Die am unteren Ende der Kolonne ablaufende Kieselsäurelösung hat einen pH-Wert von 2,3. Diese Lösung wird zur Polykondensation mit einer 1,0 molaren NaOH-Lösung auf einen pH von 4,7 gebracht und anschließend 3 Stunden bei 85°C gealtert.
a) 150 g Hydrogel werden mit konzentrierter wäßriger HCl solange gewaschen, bis das Wasser in den Gelporen mit 10 Gew.-%iger HCl versetzt ist.
Zur Silylierung werden in einem Kolben 1l Hexamethyldisiloxan (HMDSO) zum Sieden erhitzt und mit Hilfe eines heißen Stickstoffstromes (50 l/h, 100°C) in ungefähr 30 Minuten über das auf 80°C erhitzte Naßgel (150 g) geleitet. Anschließend erfolgt die Trocknung des Gels in einem heißen Stickstoffstrom (1500 l/h, 200°C) für eine Stunde. Das so erhaltene Aerogel hat eine Dichte von 0,12 g/cm³. Die spezifische Oberfläche nach BET liegt bei 677 m²/g. Der A-Wert liegt bei 0,016 W/mK.
b) 150 g Hydrogel werden mit konzentrierter wäßriger HCl solange gewaschen, bis das Wasser in den Gelporen mit 10 Gew.-%iger HCl versetzt ist.
Zur Silylierung werden in einem Kolben 1l Hexamethyldisiloxan (HMDSO) zum Sieden erhitzt und in ungefähr 30 Minuten über das auf 80°C erhitzte Naßgel (150 g) geleitet. Anschließend erfolgt die Trocknung des Gels in einem heißen Stickstoffstrom (1500 l/h, 200°C) für eine Stunde. Das so erhaltene Aerogel hat eine Dichte von 0,14 g/cm³. Die spezifische Oberfläche nach BET liegt bei 654 m²/g. Der λ-Wert liegt bei 0,015 W/mK
c) 150 g Hydrogel werden mit konzentrierter wäßriger HCI solange gewaschen, bis das Wasser in den Gelporen mit 15 Gew.-%iger HCI versetzt ist.
Zur Silylierung werden in einem Kolben 1l Hexamethyldisiloxan (HMDSO) zum Sieden erhitzt und in ungefähr 30 Minuten über das auf 80°C erhitzte Naßgel (150 g) geleitet. Anschließend erfolgt die Trocknung des Gels in einem heißen Stickstoffstrom (1500 l/h, 200°C) für eine Stunde. Das so erhaltene Aerogel hat eine Dichte von 0,11 g/cm³. Die spezifische Oberfläche nach BET liegt bei 689 m²/g. Der λ-Wert liegt bei 0,013 W/mK
d) 150 g Hydrogel werden mit konzentrierter Essigsäure solange gewaschen, bis das Wasser in den Gelporen mit etwa 15 Gew.-%iger Essigsäure versetzt ist.
Zur Silylierung werden in einem Kolben 1l Hexamethyldisiloxan (HMDSO) zum Sieden erhitzt und in ungefähr 30 Minuten über das auf 80°C erhitzte Naßgel (150 g) geleitet. Anschließend erfolgt die Trocknung des Gels in einem heißen Stickstoffstrom (1500 l/h, 200°C) für eine Stunde. Das so erhaltene Aerogel hat eine Dichte von 0,14 g/cm³. Die spezifische Oberfläche nach BET liegt bei 644 m²/g. Der λ-Wert liegt bei 0,015 W/mK.
e) Zur Silylierung werden in einem Kolben 1l Hexamethyldisiloxan (HMDSO) und 100 ml konzentrierte HCl-Lösung zum Sieden erhitzt und mit Hilfe eines heißen Stickstoffstromes (50 l/h, 100°C) in ungefähr 30 Minuten über ein 80°C heißes Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,13 g/cm³. Die spezifische Oberfläche nach BET liegt bei 680 m²/g. Der λ -Wert liegt bei 0,015 W/mK.
f) Zur Silylierung werden in einem Kolben 1l Hexamethyldisiloxan (HMDSO) und 100 ml konzentrierte HCI-Lösung zum Sieden erhitzt und das dabei entstehende Gasgemisch über das 80°C heiße Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,12 g/cm³. Die spezifische Oberfläche nach BET liegt bei 670 m²/g. Der λ -Wert liegt bei 0,013 W/mK.
g) Zur Silylierung werden in einem Kolben 1l Hexamethyldisiloxan (HMDSO) und 10 ml konzentrierte HCl-Lösung zum Sieden erhitzt und mit Hilfe eines heißen Stickstoffstromes (50 l/h, 100°C) in ungefähr 30 Minuten über das 80°C heiße Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,16 g/cm³. Die spezifische Oberfläche nach BET liegt bei 625 m²/g. Der λ -Wert liegt bei 0,015 W/mK.
h) Zur Silylierung werden in einem Kolben 1l Hexamethyldisiloxan (HMDSO) und 10 ml konzentrierte HCl-Lösung zum Sieden erhitzt und das dabei entstehende Gasgemisch über das 80°C heiße Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,135 g/cm³. Die spezifische Oberfläche nach BET liegt bei 672 m²/g. Der λ -Wert liegt bei 0,013 W/mK.
i) Zur Silylierung wird in einem Kolben 1l Trimethylchlorsilan (TMCS) zum Sieden erhitzt und mit Hilfe eines heißen Stickstoffstromes (50 l/h, 100°C) in ungefähr 30 Minuten über das 80°C heiße Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,11 g/cm³. Die spezifische Oberfläche nach BET liegt bei 685 m²/g. Der λ -Wert liegt bei 0,013 W/mK.
j) Zur Silylierung wird in einem Kolben 1l Trimethylchlorsilan (TMCS) zum Sieden erhitzt und das dabei entstehende Gas über das 80°C heiße Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,115 g/cm³. Die spezifische Oberfläche nach BET liegt bei 615 m²/g. Der λ-Wert liegt bei 0,013 W/mK.
k) Zur Silylierung werden in einem Kolben 1l Hexamethyldisiloxan (HMDSO) und 100 ml konzentrierte Essigsäure zum Sieden erhitzt und mit Hilfe eines heißen Stickstoffstromes (50 l/h, 100°C) in ungefähr 30 Minuten über das 80°C heiße Naßgel (150ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,15 g/cm³. Die spezifische Oberfläche nach BET liegt bei 635 m²/g. Der λ -Wert liegt bei 0,014 W/mK.
l) Zur Silylierung werden in einem Kolben 1l Hexamethyldisiloxan (HMDSO) und 100 ml konzentrierte Essigsäure zum Sieden erhitzt und das dabei entstehende Gasgemisch über das 80°C heiße Naßgel (150 ml) geleitet. Anschließend erfolgt die Trocknung des Gels in einem heißen Stickstoffstrom (1500 I/h, 200°C) für eine Stunde. Das so erhaltene, transparente Aerogel hat eine Dichte von 0,135 g/cm³. Die spezifische Oberfläche nach BET liegt bei 673 m²/g. Der λ -Wert liegt bei 0,013 W/mK.
m) Zur Silylierung werden in einem Kolben 1l Trimethylsiloxan (Me₃SiOH)) und 100 ml konzentrierte HCl-Lösung zum Sieden erhitzt und das dabei entstehende Gasgemisch mit Hilfe eines heißen Stickstoffstromes (50 I/h, 100°C) in ungefähr 30 Minuten über das 80°C heiße Naßgel (150 ml) geleitet. Anschließend erfolgt die Trocknung des Gels in einem heißen Stickstoffstrom (1500 l/h, 200°C) für eine Stunde. Das so erhaltene, transparente Aerogel hat eine Dichte von 0,13 g/cm³. Die spezifische Oberfläche nach BET liegt bei 645 m²/g. Der λ -Wert liegt bei 0,015 W/mK.
n) 424g einer auf 10°C gekühlten 7,5 %igen HCl-Lösung wird tropfenweise mit 712 g einer auf 10°C gekühlten Natriumwasserglaslösung (mit einem Gehalt von 13 Gew.-% SiO₂ und einem Na₂O : SiO₂ Verhältnis von 1 : 3,3) versetzt. Dabei stellt sich ein pH-Wert von 4,7 ein. Das nach einigen Sekunden gebildete Hydrogel wird 30 Minuten bei 85°C gealtert. Anschließend wird es mit 3 l warmem Wasser gewaschen.
Zur Silylierung werden in einem Kolben 1l Hexamethyldisiloxan (HMDSO) und 100 ml konzentrierte HCl-Lösung zum Sieden erhitzt und mit Hilfe eines heißen Stickstoffstromes (50 l/h, 100°C) in ungefähr 30 Minuten über das 80°C heiße Naßgel (150 ml) geleitet. Anschließend erfolgt die Trocknung des Gels in einem heißen Stickstoffstrom (1500 l/h, 200°C) für eine Stunde.

**Ergebnis:**

| | Versuch 1 |
|---|---|
| Dichte [kg/m³] | 124 |
| C-Gehalt [Gew.-%j | 12.4 |
| BET Oberfläche [m²/g] | 684 |
| Wärmeleitfähigkeit [mW/mK] | 14 |

### Beispiel 3

424 g einer auf 10°C gekühlten 7,5 %igen HCl-Lösung wird tropfenweise mit 712 g einer auf 10°C gekühlten Natriumwasserglaslösung (mit einem Gehalt von 13 Gew.-% SiO₂ und einem Na₂O : SiO₂ Verhältnis von 1 : 3,3) versetzt. Dabei stellt sich ein pH-Wert von 4,7 ein. Das nach einigen Sekunden gebildete Hydrogel wird 30 Minuten bei 85°C gealtert. Anschließend wird es mit 3 l warmern Wasser gewaschen.
a) 100 g Hydrogel werden mit konzentrierter wäßriger HCl solange gewaschen, bis das Wasser in den Gelporen eine 10 Gew.-%ige HCl ist. Zur Silylierung wird das Hydrogel mit 250 g Hexamethyldisiloxan versetzt und 4 Stunden auf 80°C erhitzt. Dabei bildet sich eine wäßrige Phase von etwa 90 g unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene Aerogel hat eine Dichte von 0,12 g/cm³. Die spezifische Oberfläche nach BET liegt bei 676 m²/g. Der λ-Wert liegt bei 0,013 W/mK.
b) 100 g Hydrogel werden mit konzentrierter wäßriger HCl solange gewaschen, bis das Wasser in den Gelporen eine 15 Gew.-%ige HCl ist. Zur Silylierung wird das Hydrogel mit 250 g Hexamethyldisiloxan versetzt und 2 Stunden auf 80°C erhitzt. Dabei bildet sich eine wäßrige Phase von etwa 100 g unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene Aerogel hat eine Dichte von 0,11 g/cm³. Die spezifische Oberfläche nach BET liegt bei 678 m²/g. Der λ -Wert liegt bei 0,013 W/mK.
c) 100 g Hydrogel werden mit konzentrierter wäßriger HCl solange gewaschen, bis das Wasser in den Gelporen eine 20 Gew.-%ige HCl ist. Zur Silylierung wird das Hydrogel mit 250 g Hexamethyldisiloxan versetzt und 1,5 Stunden auf 80°C erhitzt. Dabei bildet sich eine wäßrige Phase von etwa 100 g unterhalb der HMDSO Phase. Das hydrophobisierte Gel wird aus der HMDSO Phase entnommen und getrocknet. Die Trocknung erfolgt in einem heißen Stickstoffstrom (1500 Uh, 200°C) für eine Stunde.

**Ergebnis:**

| | Versuch 1 |
|---|---|
| Dichte [kg/m³] | 126 |
| C-Gehalt [Gew.-%] | 11.7 |
| BET Oberfläche [m²/g] | 683 |
| Wärmeleitfähigkeit [mW/mK] | 13,5 |

d) 100 g Hydrogel werden mit konzentrierter wäßriger HCl solange gewaschen, bis das Wasser in den Gelporen eine 20 Gew.-%ige HCl ist. Zur Silylierung wird das Hydrogel mit 250 g Hexamethyldisiloxan versetzt und 3 Stunden auf 60°C erhitzt. Dabei bildet sich eine wäßrige Phase von etwa 80 g unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene Aerogel hat eine Dichte von 0,13 g/cm³. Die spezifische Oberfläche nach BET liegt bei 645 m²/g. Der λ-Wert liegt bei 0,012 W/mK.

### Beispiel 4

2 l einer Natriumwasserglaslösung (SiO₂-Gehalt von 6 Gew.% und Na₂O:SiO₂ Verhältnis von 1:3,3) werden über eine ummantelte Glaskolonne (Länge = 100 cm, Durchmesser = 8 cm), die mit 4 l eines sauren lonenaustauscherharzes (Styroldivinylbenzol-Copolymer mit Sulfonsäuregruppen, handelsüblich unter dem Namen ®Duolite C 20) gefüllt ist, geleitet (ca. 70 ml/min). Die Kolonne wird bei einer Temperatur von etwa 7°C betrieben. Die am unteren Ende der Kolonne ablaufende Kieselsäurelösung hat einen pH-Wert von 2,3. Diese Lösung wird zur Polykondensation mit einer 1,0 molaren NaOH-Lösung auf einen pH von 4,7 gebracht und anschließend 3 Stunden bei 85°C gealtert.
a) Zur Silylierung werden 100 g Hydrogel mit 105 g Trimethylchlorsilan (140 ml) versetzt. Unter heftiger Gasentwicklung (HCl) bildet sich eine wäßrige Phase (120 ml konzentrierte HCl) unterhalb der HMDSO Phase. Nach 15 Minuten wird das hydrophobisierte Gel aus der HMDSO Phase (106 ml HMDSO) entnommen und getrocknet. Die Trocknung erfolgt in einem heißen Stickstoffstrom (1500 l/h, 200°C) für eine Stunde. Das so erhaltene, transparente Aerogel hat eine Dichte von 0,10 g/cm³. Die spezifische Oberfläche nach BET liegt bei 676 m²/g. Der λ -Wert liegt bei 0,011 W/mK.
b) Zur Silylierung werden 100 g Hydrogel in 100 ml Hexamethyldisiloxan suspendiert und mit 31,5 g Trimethylchlorsilan (42 ml) 30 Minuten unter Rückfluß erhitzt. Unter Gasentwicklung (HCl) bildet sich innerhalb von 20 Minuten eine wäßrige Phase unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene, transparente Aerogel hat eine Dichte von 0,13 g/cm³. Die spezifische Oberfläche nach BET liegt bei 680 m²/g. Der λ-Wert liegt bei 0,013 W/mK.
c) Zur Silylierung werden 100 g Hydrogel in 100 ml Hexamethyldisiloxan (HMDSO) suspendiert und mit 52,5 g Trimethylchlorsilan (70 ml) versetzt. Unter Gasent-wicklung (HCl) bildet sich eine wäßrige Phase unterhalb der HMDSO Phase. Nach 25 Minuten wird das hydrophobisierte Gel aus der HMDSO Phase (153 ml HMDSO) entnommen und getrocknet. Die Trocknung erfolgt in einem heißen Stickstoffstrom (1500 l/h, 200°C) für eine Stunde. Das so erhaltene, transparente Aerogel hat eine Dichte von 0,12 g/cm³. Die spezifische Oberfläche nach BET liegt bei 666 m²/g. Der λ -Wert liegt bei 0,013 W/mK.
d) Zur Silylierung werden 100 g Hydrogel in 100 ml Hexamethyldisiloxan (HMDSO) suspendiert und mit 105 g Trimethylchlorsilan (140 ml) versetzt. Unter heftiger Gasentwicklung (HCl) bildet sich eine wäßrige Phase (120 ml konzentrierte HCl) unterhalb der HMDSO Phase. Nach 15 Minuten wird das hydrophobisierte Gel aus der HMDSO Phase (206 ml HMDSO) entnommen und getrocknet. Die Trocknung erfolgt in einem heißen Stickstoffstrom (1500 l/h, 200°C) für eine Stunde. Das so erhaltene, transparente Aerogel hat eine Dichte von 0,10 g/cm³. Die spezifische Oberfläche nach BET liegt bei 676 m2/g. Der λ -Wert liegt bei 0,011 W/mK.
e) Zur Silylierung werden 100 g Hydrogel in 100 ml Hexamethyldisiloxan (HMDSO) suspendiert und mit 1050 g Trimethylchlorsilan (10 mol) versetzt. Unter heftiger Gasentwicklung (HCl) wird das Gel hydrophobisiert. Nach 10 Minuten wird das hydrophobisierte Gel aus der HMDSO Phase (4,5 mol HMDSO) entnommen und getrocknet. Die Trocknung erfolgt in einem heißen Stickstoffstrom (1500 l/h, 200°C) für eine Stunde. Das so erhaltene, transparente Aerogel hat eine Dichte von 0,10 g/cm³. Die spezifische Oberfläche nach BET liegt bei 676 m²/g. Der λ -Wert liegt bei 0,011 W/mK.
f) Das Hydrogel wird mit konzentrierter wäßriger HCl-Lösung so lange gewaschen, bis das Wasser in den Poren des Gels eine 10 %-ige HCl-Lösung ist. Zur Silylierung werden 100 g dieses Hydrogels in 100 ml Hexamethyldisiloxan suspendiert und mit 31,5 g Trimethylchlorsilan (42 ml) versetzt. Unter Gasentwicklung (HCl) bildet sich innerhalb einer Stunde ein wäßrige Phase unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde.

**Ergebnis:**

| | Versuch 1 |
|---|---|
| Dichte [kg/m³] | 101 |
| C-Gehaft [Gew.-%] | 11.5 |
| BET Oberfläche (m²/g) | 730 |
| Wärmeleitfähigkeit [mW/mK] | 13 |

### Beispiel 5

424 g einer auf 10°C gekühlten 7,5 %igen HCl-Lösung wird tropfenweise mit 712 g einer auf 10°C gekühlten Natriumwasserglaslösung (mit einem Gehalt von 13 Gew.-% SiO₂ und einem Na₂O : SiO₂ Verhältnis von 1 : 3,3) versetzt. Dabei stellt sich ein pH-Wert von 4,7 ein. Das nach einigen Sekunden gebildete Hydrogel wird 30 Minuten bei 85°C gealtert. Anschließend wird es mit 3 l warmem Wasser gewaschen.
a) Das Hydrogel wird mit konzentrierter wäßriger HCI-Lösung so lange gewaschen, bis das Wasser in den Poren des Gels eine 15 %-ige HCl-Lösung ist.
Zur Silylierung werden 100 g dieses Hydrogels in 100 ml Hexamethyldisiloxan suspendiert und mit 31,5 g Trimethylchlorsilan (42 ml) unter Rückfluß erhitzt. Unter Gasentwicklung (HCI) bildet sich eine wäßrige Phase unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde.

**Ergebnis:**

| | Versuch 1 | Versuch 2 | Versuch 3 |
|---|---|---|---|
| Dichte [kg/m³] | 132 | 122 | 118 |
| C-Gehalt [Gew.-%] | 12.0 | 11.7 | 11.6 |
| BET Oberfläche [m²/g] | 732 | 683 | 701 |
| Wärmeleitfähigkeit [mW/mK] | 13 | - | - |

b) Zur Silylierung werden 100 g Hydrogel in 100 ml Hexamethyldisiloxan (HMDSO) suspendiert und mit 105 g Trimethylchlorsilan (140 ml) versetzt. Unter heftiger Gasentwicklung (HCI) bildet sich eine wäßrige Phase (120 ml konzentrierte HCI) unterhalb der HMDSO Phase. Nach 15 Minuten wird das hydrophobisierte Gel aus der HMDSO Phase (206 ml HMDSO) entnommen und getrocknet. Die Trocknung erfolgt in einem heißen Stickstoffstrom (1500 l/h, 200°C) für eine Stunde.

**Ergebnis:**

| | Versuch 1 |
|---|---|
| Dichte [kg/m³] | 152 |
| C-Gehalt [Gew.-%] | 12.0 |
| BET Oberfläche [m²/g] | 732 |
| Wärmeleitfähigkeit [mW/mK] | 14 |

### Beispiel 6:

21 einer Natriumwasserglaslösung (SiO₂-Gehalt von 6 Gew.-% und Na₂O:SiO₂ Verhältnis von 1:3,3) werden über eine ummantelte Glaskolonne (Länge = 100 cm, Durchmesser = 8 cm), die mit 4 l eines sauren lonenaustauscherharzes (Styroldivinylbenzol-Copolymer mit Sulfonsäuregruppen, handelsüblich unter dem Namen ®Duolite C 20) gefüllt ist, geleitet (ca. 70 ml/min). Die Kolonne wird bei einer Temperatur von etwa 7°C betrieben. Die am unteren Ende der Kolonne ablaufende Kieselsäurelösung hat einen pH-Wert von 2,3. Diese Lösung wird zur Polykondensation mit einer 1,0 molaren NaOH-Lösung auf einen pH von 4,7 gebracht und anschließend 3 Stunden bei 85°C gealtert.
a) 100 g Hydrogel werden mit HCl-Gas so lange durchströmt, bis sich eine gleichmäßige Konzentration von ungefähr 15 Gew.-% an wäßriger HCl-Lösung im Gel einstellt (etwa 5 Minuten). Dabei wird das Gel aufgrund der Lösungswärme so heiß, daß etwas Wasser verdampft und das Naßgel etwa 10 bis 20 Vol.% schrumpft. Danach ist das Hydrogel an der äußeren Oberfläche getrocknet.
   Zur Silylierung wird das Hydrogel mit 250 g Hexamethyldisiloxan versetzt und 2 Stunden auf 80°C erhitzt. Dabei bildet sich eine wäßrige Phase von etwa 100 g unterhalb der HMDSO Phase.
   Das hydrophobisierte Gel wird aus der HMDSO Phase entnommen und getrocknet. Die Trocknung erfolgt in einem heißen Stickstoffstrom (1500 I/h, 200°C) für eine Stunde. Das so erhaltene Aerogel hat eine Dichte von 0,12 g/cm³. Die spezifische Oberfläche nach BET liegt bei 666 m²/g. Der λ-Wert liegt bei 0,014 W/mK.
b) 100 g Hydrogel wird mit HCl-Gas so lange durchströmt, bis sich eine gleichmäßige Konzentration von ungefähr 15 Gew.-% an wäßriger HCl-Lösung im Gel einstellt (etwa 5 Minuten). Dabei wird das Gel aufgrund der Lösungswärme so heiß, das etwas Wasser verdampft und das Naßgel etwa 10 bis 20 Vol.-% schrumpft. Danach ist das Hydrogel an der äußeren Oberfläche getrocknet.
   Zur Silylierung wird das Hydrogel in 100 ml Hexamethyldisiloxan suspendiert und mit 31,5 g Trimethylchlorsilan (42 ml) versetzt. Dabei bildet sich innerhalb einer Stunde eine wäßrige, HCl-haltige Phase unterhalb der HMDSO Phase. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene, transparente Aerogel hat eine Dichte von 0,92 g/cm³.
   Die spezifische Oberfläche nach BET liegt bei 656 m²/g. Der λ-Wert liegt bei 0,013 W/mK.

### Beispiel 7:

424 g einer auf 10°C gekühlten 7,5%igen HCl-Lösung wird tropfenweise mit 712 g einer auf 10°C gekühlten Natriumwasserglaslösung (mit einem Gehalt von 13 Gew.-% SiO₂ und einem Na₂O:SiO₂ Verhältnis von 1:3,3) versetzt. Dabei stellt sich ein pH-Wert von 4,7 ein. Das nach einigen Sekunden gebildete Hydrogel wird 30 Minuten bei 85°C gealtert und wie folgt behandelt.
a) 150 g NaCl-haltiges Hydrogel wird mit 300 ml wäßriger konz. HCl Lösung langsam durchströmt. Nach Ablauf der wäßrigen Lösung wird das angesäuerte Hydrogel zur Silylierung in 100 g HMDSO suspendiert und mit 40 g TMCS versetzt. Nach 30 Minuten wird das hydrophobisierte Gel aus der HMDSO Phase entnommen und getrocknet. Die Trocknung erfolgt in einem heißen Stickstoffstrom (1500 l/h, 200°C) für eine Stunde.

**Ergebnis:**

| | Versuch 1 | Versuch 2 | Versuch 3 |
|---|---|---|---|
| Dichte [kg/m³] | 110 | 122 | 130 |
| C-Gehalt [Gew.-%] | 10.4 | 9.4 | 8.9 |
| BET Oberfläche [m²/g] | 614 | 560 | 568 |
| NaCl-Gehalt [Gew.-%] | 7.1 | 6.9 | 6.9 |

b) 150 g NaCl-haltiges Hydrogel wird mit 300 ml wäßriger halbkonz. HCl Lösung langsam durchströmt. Nach Ablauf der wäßrigen Lösung wird das angesäuerte Hydrogel zur Sitylierung in 100 g HMDSO suspendiert und mit 40 g TMCS versetzt. Nach 60 Minuten wird das hydrophobisierte Gel aus der HMDSO Phase entnommen und getrocknet. Die Trocknung erfolgt in einem heißen Stickstoffstrom (1500 I/h, 200°C) für eine Stunde.

**Ergebnis:**

| | Versuch 1 |
|---|---|
| Dichte [kg/m³] | 119 |
| C-Gehalt [Gew.-%] | 9.3 |
| BET Oberfläche [m²/g] | 587 |
| NaCl-Gehalt [Gew.-%] | 4.3 |

c) 150 g NaCl-haltiges Hydrogel wird mit 1 Liter wäßriger konz. HCl Lösung langsam durchströmt. Nach Ablauf der wäßrigen Lösung wird das angesäuerte Hydrogel zur Silylierung in 100 g HMDSO suspendiert und mit 40 g TMCS versetzt. Nach 30 Minuten wird das hydrophobisierte Gel aus der HMDSO Phase entnommen und getrocknet. Die Trocknung erfolgt in einem heißen Stickstoffstrom (1500 l/h, 200°C) für eine Stunde.

**Ergebnis:**

| | Versuch 1 |
|---|---|
| Dichte [kg/m³] | 114 |
| C-Gehalt [Gew.-%] | 9.0 |
| BET Oberfläche [m²/g] | 558 |
| NaCl-Gehalt [Gew.-%] | 6.4 |

d) 100 g NaCl haltiges Hydrogel wird mit HCl-Gas so lange durchströmt, bis sich eine gleichmäßige Konzentration von ungefähr 15 Gew.-% an wäßriger HCl-Lösung im Gel einstellt (etwa 5 Minuten). Dabei wird das Gel aufgrund der Lösungswärme so heiß, daß etwas Wasser verdampft und das Naßgel etwa 10 bis 20 Vol.% schrumpft. Danach ist das Hydrogel an der äußeren Oberfläche getrocknet.

### Versuch 1,2,3 und 4:

Zur Silylierung wird das Hydrogel in 100 ml Hexamethyldisiloxan suspendiert und mit 31,5 g Trimethylchlorsilan versetzt.

### Versuch 5:

Zur Silylierung wird das Hydrogel in 100 ml Hexamethyldisiloxan suspendiert und mit 120 g (1.1 mol) Trimethylchlorsilan versetzt.

### Versuch 6 und 7:

Zur Silylierung wird das Hydrogel in 100 ml Hexamethyldisiloxan suspendiert und mit 140 g (1.4 mol) Trimethylchlorsilan versetzt.

### Versuch 8:

Zur Silylierung wird das Hydrogel mit 250 g Hexamethyldisiloxan versetzt und 2 Stunden auf 80°C erhitzt.

**Ergebnisse:**

| | Vers. 1 | Vers. 2 | Vers. 3 | Vers. 4 | Vers. 5 | Vers. 6 | Vers. 7 | Vers. 8 |
|---|---|---|---|---|---|---|---|---|
| Dichte [kg/m³] | 125 | 150 | 144 | 144 | 140 | 130 | 130 | 140 |
| C-Gehalt [Gew.-%] | 9.2 | 7.1 | 6.9 | 7.8 | 6.8 | 7.3 | 7.0 | 9.6 |
| BET Oberfläche [m²/g] | 549 | 422 | 431 | 431 | 425 | 431 | 405 | 570 |
| NaCl-Gehalt [Gew.-%] | 8.4 | 18.0 | 11.4 | 12.8 | 18.6 | 16.3 | 20.1 | 5.6 |

Das hydrophobisierte Gel wird in allen Versuchen nach 30 Minuten aus der HMDSO Phase entnommen und getrocknet. Die Trocknung erfolgt in einem heißen Stickstoffstrom (1500 l/h, 200°C) für eine Stunde.

### Beispiel 8:

641 g (35,6 mol) auf 7°C gekühltes Wasser werden langsam mit 135 g (0,8 mol, 91,2 ml) Siliciumtetrachlorid (SiCl₄) (auf 7°C gekühlt) tropfenweise versetzt. Das sich dabei unter Wärmeentwicklung bildende Naßgel hat eine rechnerische SiO₂₋Konzentration von 6,1 Gew.%.

In den Versuchen 1,2, und 3 wird das Gel 30 Minuten, im Versuch 4 2 Stunden bei 50 °C gealtert.

Zur Silylierung werden 100 g Hydrogel in 100 ml Hexamethyldisiloxan (HMDSO) suspendiert und mit 52,5 g (0,5 mol, 70 ml) Trimethylchlorsilan versetzt. In weinigen Minuten bildet sich eine wäßrige Phase unterhalb der HMDSO Phase. Nach 30 Minuten wird das hydrophobisierte HMDSO feuchte Gel aus der HMDSO Phase entnommen und getrocknet. Die Trocknung erfolgt in einem heißen Stickstoffstrom (1500 l/h, 200°C) für eine Stunde.

**Ergebnis:**

| | Versuch 1 | Versuch 2 | Versuch 3 | Versuch 4 |
|---|---|---|---|---|
| Dichte [kg/m³] | 152 | 130 | 288 | 152 |
| C-Gehalt [Gew.-%] | 11.7 | 11.0 | 11.7 | 11.0 |
| BET Oberfläche [m²/g] | 684 | 606 | 695 | 630 |
| Wärmeleitfähigkeit [mW/mK] | - | - | - | 13.2 |

### Beispiel 9:

a) 424 g einer auf 10°C gekühlten 7,5%igen HCl-Lösung werden tropfenweise mit 712 g einer auf 10°C gekühlten Natriumwasserglaslösung (mit einem Gehalt von 13 Gew.- % SiO₂ und einem Na₂O:SiO₂ Verhältnis von 1:3,3) versetzt. Dabei stellt sich ein pH-Wert von 4,7 ein. Das nach einigen Sekunden gebildete Hydrogel wird 30 Minuten bei 85°C gealtert. Anschließend wird es mit 3 I warmem Wasser gewaschen. 100 g Hydrogel werden in 140 ml Hexamethyldisiloxan (HMDSO) suspendiert und 30 Minuten lang mit einem HCl-Gasstrom (ca. 40 g) durchströmt. Dabei steigt die Temperatur der Suspension auf 82 °C. Gleichzeitig werden 120 g einer wäßrigen HCl haltigen Phase abgetrennt. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene Aerogel hat eine Dichte von 0,124 g/cm³. Die spezifische Oberfläche nach BET liegt bei 673 m²/g. Der C-Gehalt beträgt 12,0 Gew.-%.
b) 424 g einer auf 10°C gekühlten 7.5%igen HCl-Lösung werden tropfenweise mit 712 g einer auf 10°C gekühlten Natriumwasserglaslösung (mit einem Gehalt von 13 Gew.% SiO₂ und einem Na₂O:SiO₂ Verhältnis von 1:3,3) versetzt. Dabei stellt sich ein pH-Wert von 4,7 ein. Das nach einigen Sekunden gebildete Hydrogel wird 30 Minuten bei 85°C gealtert und wie folgt behandelt. 100 g des NaCl-haltigen Hydrogels (4,3 g NaCl in 100g Hydrogel) werden in 150 ml Hexamethyldisiloxan (HMDSO) suspendiert und 45 Minuten lang mit einem HCl-Gasstrom (ca. 46 g) durchströmt. Dabei steigt die Temperatur der Suspension auf 75 °C. Gleichzeitig werden ca. 120 g einer wäßrigen HCl haltigen Phase abgetrennt. Das hydrophobisierte Gel wird aus der HMDSO Phase entnommen und getrocknet. Die Trocknung erfolgt in einem heißen Stickstoffstrom (1500 l/h, 200°C) für eine Stunde. Das so erhaltene Aerogel hat eine Dichte von 0,115 g/cm³. Die spezifische Oberfläche nach BET liegt bei 488 m²/g. Der C-Gehalt beträgt 9,5 Gew.-%. Die NaCl Konzentration bezogen auf das Aerogelgewicht beträgt 6.4 Gew.-%.

### Vergleichsbeispiele:

### Vergleichsbeispiel 1:

### (in Anlehnung an US-A-3,015,645 bzw. GB-A-682,574)

Es werden 70 g HCl (25 Gew.-%) mit 180 g Wasser verdünnt und gekühlt auf 8°C vorgelegt. Die Wasserglaslösung (211,8 g 33,33 Gew.-% Wasserglaslösung mit einem Na₂O:SiO₂ Verhältnis von 1:3,3 verdünnt mit 38,2 g H₂O) wird langsam unter kräftigem Rühren in die HCl-Lösung gegeben. Bei einem pH-Wert von 6,9 geliert die Mischung. Nach einer Alterung von 30 Minuten bei Raumtemperatur wird das Gel zerkleinert und so lange mit warmen Wasser gewaschen, bis es frei von Chloridionen ist (Chloridionen im Gel 0,15 Gew.-%). Danach wird ein Lösemitteltausch nach Aceton durchgeführt, bis der Wassergehalt im Gel < 1 Gew.-% ist. Anschließend wird das Aceton gegen Tetrachlorkohlenstoff ausgetauscht. 327g Gel werden in Tetrachlorkohlenstoff suspendiert und zur Silylierung mit 262 g Trimethylchlorsilan (TMCS) versetzt. Nach 2 Stunden Sieden unter Rückfluß wird das silylierte Gel mit Tetrachlorkohlenstoff frei von überschüssigem TMCS gewaschen und getrocknet. Die Trocknung erfolgt in einem heißen Stickstoffstrom (1500 l/h, 200°C) für eine Stunde.

**Ergebnis:**

| | |
|---|---|
| Dichte [kg/m³] | 167 |
| C-Gehalt [Gew.-%] | 5.9 |
| BET Oberfläche [m²/g] | 416 |

### Vergleichsbeispiel 2:

### (in Anlehnung an EP-A-0 658 513)

2l einer Natriumwasserglaslösung (SiO₂-Gehalt von 6 Gew.-% und Na₂O:SiO₂ Verhältnis von 1:3,3) werden über eine ummantelte Glaskolonne (Länge = 100 cm, Durchmesser = 8 cm), die mit 4 I eines sauren lonenaustauscherharzes (Styroldivinylbenzol-Copolymer mit Sulfonsäuregruppen, handelsüblich unter dem Namen ®Duolite C 20) gefüllt ist, geleitet (ca. 70 ml/min). Die Kolonne wird bei einer Temperatur von etwa 7°C betrieben. Die am unteren Ende der Kolonne ablaufende Kieselsäurelösung hat einen pH-Wert von 2,3. Diese Lösung wird zur Polykondensation mit einer 1,0 molaren NaOH-Lösung auf einen pH von 4,7 gebracht und anschließend 3 Stunden bei 85°C gealtert.
Das Naßgel wird mit Ethanol solange gewaschen, bis das Wasser vollständig gegen Ethanol ausgetauscht ist. Danach wird mit n-Heptan so lange gewaschen, bis das Ethanol vollständig gegen n-Heptan ausgetauscht ist.
Zur Silylierung werden 100 g Naßgel in n-Heptan für 12 Stunden bei 50°C mit 10 Gew.% Trimethylchlorsilan versetzt. Anschließend wird das Gel mit n-Heptan frei von überschüssigem TMCS gewaschen und getrocknet. Die Trocknung erfolgt in einem heißen Stickstoffstrom (1500 l/h, 200°C) für eine Stunde.

**Ergebnis:**

| | Versuch 1 | Versuch 2 |
|---|---|---|
| Dichte (kg/m³] | 130 | 150 |
| C-Gehalt [Gew.-%] | 9.6 | 8.5 |
| BET Oberfläche [m²/g] | 689 | 602 |

### Vergleichsbeispiel 3:

### (in Anlehnung an DE-A-195 41 715)

236 g einer auf 0°C gekühlten 25%igen H₂SO₄ werden tropfenweise unter ständigem Kühlen auf 0°C mit 707 g einer auf 7°C gekühlten Natriumwasserglaslösung (mit einem Gehalt von 17 Gew.-% SiO₂ und einem Na₂O:SiO₂ Verhältnis von 1:3,3) versetzt. Dabei stellt sich ein pH-Wert von 1,6 ein. Das ausfallende Na₂SO₄ * 10 H₂O wird bei 0°C mit Hilfe einer Nutsche vom Kieselsäuresol abgetrennt und das Kieselsäuresol mit 280 ml H₂O verdünnt. Das so erhaltene Kieselsäuresol wird bei einer Temperatur von 5°C unter Rühren mit 26 ml einer 1n NaOH-Lösung versetzt, um einen pH-Wert von 4,7 einzustellen. Danach wird das entstandene Hydrogel 2,5 Stunden bei 85°C gealtert, mit 2 l warmem Wasser gewaschen und das Wasser mit Aceton so lange extrahiert, bis der Wassergehalt im Gel unter 2 Gew.-% liegt.

### Versuch 1,2 und 3:

Das acetonhaltige Gel wird mit 5 Gew.% Trimethylchlorsilan (TMCS) 3 Stunden bei 50°C silyliert und mit 2 I Aceton gewaschen. Die Trocknung erfolgt in einem heißen Stickstoffstrom (1500 l/h, 200°C) für eine Stunde.

### Versuch 4,5 und 6:

Das acetonhaltige Gel wird mit 10 Gew.-% Trimethylchlorsilan (TMCS) 3 Stunden bei 50°C silyliert und mit 2 I Aceton gewaschen. Die Trocknung erfolgt in einem heißen Stickstoffstrom (1500 l/h, 200°C) für eine Stunde.

**Ergebnis:**

| | Vers. 1 | Vers. 2 | Vers. 3 | Vers. 4 | Vers. 5 | Vers. 6 |
|---|---|---|---|---|---|---|
| Dichte [kg/m³] | 224 | 215 | 198 | 204 | 129 | 120 |
| C-Gehalt [Gew.-%] | 6.9 | 3.9 | 4.0 | 4.9 | 7.0 | 5.8 |
| BET Oberfläche [m²/g] | 719 | 374 | 375 | 442 | 615 | 653 |

### Vergleichsbeispiel 4:

### (in Anlehnung an DE-A-44 04 701 und DE-A-195 06 141)

21 einer Natriumwasserglaslösung (SiO₂-Gehalt von 6 Gew.-% und Na₂O:SiO₂ Verhältnis von 1:3,3) werden über eine ummantelte Glaskolonne (Länge = 100 cm, Durchmesser = 8 cm), die mit 4 l eines sauren Ionenaustauscherharzes (Styroldivinylbenzol-Copolymer mit Sulfonsäuregruppen, handelsüblich unter dem Namen ®Duolite C 20) gefüllt ist, geleitet (ca. 70 ml/min). Die Kolonne wird bei einer Temperatur von etwa 7°C betrieben. Die am unteren Ende der Kolonne ablaufende Kieselsäurelösung hat einen pH-Wert von 2,3. Diese Lösung wird zur Polykondensation mit einer 1,0 molaren NaOH-Lösung auf einen pH von 4,7 gebracht und anschließend 3 Stunden bei 85°C gealtert.

### Versuch 1 bis 10:

Das Naßgel wird solange mit Aceton extrahiert, bis der Wassergehalt im Gel unter 2 Gew.-% liegt. Das acetonhaltige Gel wird mit 5 Gew.-% Trimethylchlorsilan (TMCS) 5 Stunden bei 50°C silyliert und mit 2 l Aceton gewaschen. Die Trocknung erfolgt in einem heißen Stickstoffstrom (1500 l/h, 200°C) für eine Stunde.

**Ergebnis:**

| Versuch | 1 | 2 | 3 | 4 | 5 | 6 | 7 | 8 | 9 | 10 |
|---|---|---|---|---|---|---|---|---|---|---|
| Dichte [kg/m³] | 253 | 203 | 244 | 148 | 155 | 231 | 306 | 264 | 186 | 192 |
| C-Gehalt [Gew.-%] | 4.3 | 5.8 | 4.3 | 6.5 | 5.7 | 5.0 | 4.6 | 3.7 | 4.0 | 4.5 |
| BET Oberfläche [m²/g] | 365 | 437 | 353 | 503 | 489 | 440 | 414 | 375 | 366 | 357 |

### Versuch 11 bis 20:

Das Naßgel wird solange mit Aceton extrahiert, bis der Wassergehalt im Gel unter 2 Gew.-% liegt. Das acetonhaltige Gel wird mit 10 Gew.-% Trimethylchlorsilan (TMCS) 5 Stunden bei 50°C silyliert und mit 2 l Aceton gewaschen. Die Trocknung erfolgt in einem heißen Stickstoffstrom (1500 l/h, 200°C) für eine Stunde.

**Ergebnis:**

| Versuch | 11 | 12 | 13 | 14 | 15 | 16 | 17 | 18 | 19 | 20 |
|---|---|---|---|---|---|---|---|---|---|---|
| Dichte [kg/m³] | 177 | 234 | 156 | 192 | 158 | 182 | 166 | 165 | 137 | 150 |
| C-Gehalt [Gew.-%] | 4.9 | 4.6 | 5.6 | 4.9 | 5.7 | 5.6 | 5.6 | 4.6 | 7.1 | 2.7 |
| BET Oberfläche [m²/g] | 407 | 404 | 442 | 420 | 419 | 409 | 435 | 391 | 536 | 721 |

### Versuch 21 bis 26:

Das Naßgel wird solange mit Isopropanol extrahiert, bis der Wassergehalt im Gel unter 2 Gew.-% liegt. Das isopropanolhaltige Gel wird mit 10 Gew.-% Trimethylchlorsilan (TMCS) 5 Stunden bei 70°C silyliert und mit 2 I Isopropanol gewaschen. Die Trocknung erfolgt in einem heißen Stickstoffstrom (1500 l/h, 200°C) für eine Stunde.

**Ergebnis:**

| Versuch | 21 | 22 | 23 | 24 | 25 | 26 |
|---|---|---|---|---|---|---|
| Dichte [kg/m³] | 220 | 214 | 164 | 182 | 247 | 237 |
| C-Gehalt [Gew.-%] | 5.9 | 5.2 | 6.4 | 5.6 | 5.7 | 5.3 |
| BET Oberfläche [m²/g] | 546 | 407 | 451 | 427 | 417 | 392 |

### Vergleichsbeispiel 5:

### (in Anlehnung an DE-A-196 31 267)

424 g einer auf 10°C gekühlten 7,5%igen HCl-Lösung werden tropfenweise mit 712 g einer auf 10°C gekühlten Natriumwasserglaslösung (mit einem Gehalt von 13 Gew.-% SiO₂ und einem Na₂O:SiO₂ Verhältnis von 1:3,3) versetzt. Dabei stellt sich ein pH-Wert von 4,7 ein. Das nach einigen Sekunden gebildete Hydrogel wird 30 Minuten bei 85°C gealtert. Anschließend wird es mit 3 I warmem Wasser gewaschen. Das Naßgel wird solange mit Aceton extrahiert, bis der Wassergehalt im Gel unter 2 Gew.-% liegt. Das acetonhaltige Gel wird mit 5 Gew.-% Trimethylchlorsilan (TMCS) 5 Stunden bei 50°C silyliert und mit 2 l Aceton gewaschen. Die Trocknung erfolgt in einem heißen Stickstoffstrom (1500 l/h, 200°C) für eine Stunde.

**Ergebnis:**

| | |
|---|---|
| Dichte [kg/m³] | 126 |
| C-Gehalt [Gew.-%] | 10.7 |
| BET Oberfläche [m²/g] | 771 |

Die Wärmeleitfähigkeiten wurden mit einer Heizdrahtmethode (s. z. B. O. Nielsson, G. Rüschenpöhler, J. Groß, J. Fricke, High Temperatures - High Pressures, Vol. 21, 267-274 (1989)) gemessen.

Das erfindungsgemäße Verfahren zur Herstellung von Naßgelen kann anhand der beschriebenen Ausführungsbeispiele zur Herstellung von Aerogelen näher beschrieben werden, ohne dadurch beschränkt zu werden. Der einzige Unterschied besteht darin, daß in allen Beispielen die beschriebene Trocknung entfällt.

## Patentansprüche

1. Verfahren zur HersteHung von organisch modifizierten Aerogelen, bei dem man
a) ein Hydrogel vorlegt,
b) das in Schritt a) erhaltene Hydrogel unter Verzicht eines Lösungsmitteiaustausches des Wassers gegen ein anderes Lösungsmittel obertlächenmodifiziert, und
c) das in Schritt b) erhaltene oberflächenmodifizierte Gel trocknet.

2. Verfahren gemäß Anspruch 1, **dadurch gekennzeichnet daß** man in Schritt a) ein silikatisches Hydrogel vorlegt.

3. Verfahren gemäß Anspruch 2, **dadurch gekennzeichnet daß** man in Schritt a) ein silikatisches Hydrogel vorlegt, das **dadurch** hergestellt wird, daß man eine wäßrige Wasserglaslösung mit Hilfe eines sauren lonenaustauscherharzes, einer Mineralsäure oder einer salzsauren Lösung auf einen pH-Wert ≤ 3 bringt, die dabei entstandene Kieselsäure durch Zugabe einer Base zu einem SiO₂-Gel polykondensiert und das Gel mit Wasser gegebenenfalls elektrolitfrei wäscht.

4. Verfahren gemäß Anspruch 2, **dadurch gekennzeichnet, daß** man in Schritt a) ein silikatisches Hydrogel vorlegt, das **dadurch** hergestellt wird, daß man es aus einer wäßrigen Wasserglaslösung mit Hilfe mindestens einer organischen und/oder anorganischen Säure über die Zwischenstufe eines Kieselsäuresols erhält.

5. Verfahren gemäß Anspruch 2, **dadurch gekennzeichnet, daß** man in Schritt a) ein silikatisches Hydrogel vorlegt, das man durch Hydrolyse und Polykondensation von Siliciumtetrachlorid erhält.

6. Verfahren gemäß mindestens einem der Ansprüche 2 bis 5, **dadurch gekennzeichnet, daß** man vor und/oder während der Gelherstallung Zusatzstoffe zusetzt

7. Verfahren gemäß Anspruch 6, **dadurch gekennzeichnet, daß** man als Zusatzstoffe Trübungsmittel und/oder Fasern zusetzt

8. Verfahren gemäß mindestens einem der vorhergehenden Ansprüche, **dadurch gekennzeichnet, daß** man das in Schritt a) erhaltene Hydrogel, bevor man es in Schritt b) oberflächenmodifiziert, altern läßt.

9. Verfahren gemäß mindestens einem der vorhergehenden Ansprüche, **dadurch gekennzeichnet, daß** man das erhaltene Hydrogel in Schritt b) oberflächensilyliert.

10. Verfahren gemäß Anspruch 9, **dadurch gekennzeichnet, daß** man das Silylierungsmittel in flüssiger Form und/oder als Gas bzw. Dampf verwendet.

11. Verfahren gemäß Anspruch 9 oder 10, **dadurch gekennzeichnet, daß** als Silylierungsmittel mindestens ein Silan der Formeln R¹₄₋ₙSiClₙ oder R¹₄₋ₙSi(OR²)ₙ mit n =1 bis 4 eingesetzt wird, wobei R¹ und R² unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest bedeuten.

12. Verfahren gemäß Anspruch 11, **dadurch gekennzeichnet, daß** als Silyllerungsmittel Trimethylchlorsilan eingesetzt wird.

13. Verfahren gemäß Anspruch 9 oder 10, **dadurch gekennzeichnet, daß** als Silylierungsmittel mindestens ein Disiloxan der Formel I und/oder ein Disilazan der Formel II eingesetzt wird,
R₃Si-O-SiR₃ (I)
R₃Si-N(H)-SiR₃ (II)
wobei die Reste unabhängig voneinander, gleich oder verschieden, je ein Wasserstoffatom oder ein nicht reaktiver, organischer, linearer, verzweigter, cyclischer, gesättigter oder ungesättigter, aromatischer oder heteroaromatischer Rest, bedeuten.

14. Verfahren gemäß Anspruch 13, **dadurch gekennzeichnet, daß** als Silylierungsmittel in Schritt b) ein symmetrisches Disiloxan eingesetzt wird.

15. Verfahren gemäß Anspruch 13 oder 14, **dadurch gekennzeichnet, daß** in Schritt b) als Silylierungsmittel ein Disiloxan eingesetzt wird, bei dem alle Reste R gleich sind.

16. Verfahren gemäß mindestens einem der Ansprüche 13 bis 15, **dadurch gekennzeichnet, daß** als Silylienrngsmittel Hexamethyldisiloxan eingesetzt wird.

17. Verfahren gemäß mindestens einem der vorhergehenden Ansprüche, **dadurch gekennzeichnet, daß** man vor der Oberflächenmodifikation mindestens eine Säure und/oder Base im Hydrogel vorlegt.

18. Verfahren gemäß Anspruch 17, **dadurch gekennzeichnet, daß** man als Säure HCl verwendet.

19. Verfahren gemäß mindestens einem der vorhergehenden Ansprüche, **dadurch gekennzeichnet, daß** man das Hydrogel in dem oder den Silylierungsmitteln vorlegt und anschließend mit mindestens einer Säure und/oder Base versetzt.

20. Verfahren gemäß Anspruch 19, **dadurch gekennzeichnet, daß** man als Silylierungsmittel HMDSO verwendet.

21. Verfahren gemäß Anspruch 19 oder 20, **dadurch gekennzeichnet daß** man als Säure Salzsäure verwendet

22. Verfahren gemäß mindestens einem der vorhergehenden Ansprüche, **dadurch gekennzeichnet, daß** das Mittel zur Oberflächenmodifikation kurz vor und/oder während der Oberflächenmodifikation, vorzugsweise mittels einer Säure, generiert wird.

23. Verfahren gemäß mindestens einem der vorhergehenden Ansprüche, **dadurch gekennzeichnet, daß** die Oberflächenmodifikation durch einen Katalysator beschleunigt wird.

24. Verfahren gemäß mindestens einem der vorhergehenden Ansprüche, **dadurch gekennzeichnet, daß** man in Schritt b) zusätzlich zum Mittel für die Oberflächenmodifikation mindestens ein Trägergas bzw. Tragergasstrom verwendet

25. Verfahren gemäß mindestens einem der vorhergehenden Ansprüche, **dadurch gekennzeichnet, daß** ein Teil des Wassers in den Poren des Hydrogels mit dem verwendeten Mittel zur Oberflächenmodifikation zu einer wasserunlöslichen Verbindung reagiert

26. Verfahren gemäß Anspruch 25, **dadurch gekennzeichnet, daß** sich HMDSO bildet.

27. Verfahren gemäß mindestens einem der vorhergehenden Ansprüche, **dadurch gekennzeichnet, daß** man die äußere Oberfläche des Hydrogels vor der Oberflächenmodifikation trocknet.

28. Verfahren gemäß Anspruch 27. **dadurch gekennzeichnet, daß** man die äußere Oberfläche mittels mindestens einem Gas trocknet.

29. Verfahren gemäß anspruch 27 oder 28, **dadurch gekennzeichnet, daß** man die äußere Oberfläche mittels HCl-Gas trocknet

30. Verfahren gemäß Anspruch 27, **dadurch gekennzeichnet, daß** man die äußere oberfläche mittels HMDSO trocknet

31. Verfahren gemäß mindestens einem der vorhergehenden Ansprüche, **dadurch gekennzeichnet, daß** man das oberflächenmodirfizierte Gel vor dem Schritt c) mit einem protischen oder aprotischen Lösungsmittel wäscht.

32. Venahren gemäß mindestens einem der vorhergehenden Ansprüche, **dadurch gekennzeichnet, daß** man das oberflächenmodifizierte Gel vor dem Schritt c) mit einem Silylierungsmittel wäscht.

33. Verfahren gemäß mindestens einem der vorhergehenden Ansprüche, **dadurch gekennzeichnet, daß** man das oberflächenmodifizierte Gel in Schritt c) unterkritisch trocknet.

34. Verfahren gemäß mindestens einem der Ansprüche 2 bis 33, **dadurch gekennzeichnet, daß** man das in Schritt a) erhaltene Gel vor der Silylierung mit einer Lösung eines zur Kondensation befähigten Orthosilikates, der Formel R¹ ₄₋ₙSi(OR²)_{n'} vorzugsweise einem Alkyl- und/oder Arylorthosilikat, wobei n = 2 bis 4 ist und R¹ und R² unabhängig voneinander Wasserstoffatome, lineare oder verzweigte C₁-C₆-Alkyl-Reste, Cyclohexyl-Reste oder Phenyl-Reste sind, oder mit einer wäßrigen Kieselsäure-Losung umsetzt.

35. Verfahren gemäß mindestens einem der vorhergehenden Ansprüche, **adurch gekennzeichnet, daß** man die Oberflächenmodifizierung unter Anwesenheit von Zusatzstoffen im Hydrogel durchführt.

36. Verfahren gemäß Anspruch 35, **dadurch gekennzeichnet, daß** man als Zusatzstoffe ionische Verbindungen, vorzugsweise Nacl, verwendet.

37. Verfahren gemäß Anspruch 35 oder 36, **dadurch gekennzeichnet, daß** man als Zusatzstoffe Trübungsmittel, vorzugsweise IR-Trübungsmittel, venwendet.

38. Verfahren nach Anspruch 1, **dadurch gekennzeichnet, daß** in Schritt b) das Silylierungsmittel direkt als Reaktand angeboten wird, ohne daß vorher ein Austausch des in den Poren enthaltenen Wassers gegen ein organisches Lösungsmittel oder CO₂stattfindet

39. Verfahren nach Anspruch 1, **dadurch gekennzeichnet, daß** in Schritt b) die Oberfläche des Hydrogels ohne vorherigen Lösungsmittelaustausch modifiziert wird.

40. Verfahren nach Anspruch 1, **dadurch gekennzeichnet, daß** die für die eigentliche Silylierungsreaktion notwendigen Silylierungsmittel aus anderen Substanzen generiert werden.

41. Verfahren nach Anspruch 1, **dadurch gekennzeichnet, daß** die für die eigentliche Silyllerungsreaktion notwendigen Silylierungsmittel aus anderen Silylierungsmittel generiert werden.

42. Verfahren nach Anspruch 1, **dadurch gekennzeichnet, daß** die für die eigentliche Silylierungsreaktion notwendigen Silylierungsmittel vor und/oder während der Silyllerungsreaktion genonert werden.

43. Aerogele erhalten nach einem Verfahren gemäß den Ansprüchen 1 - 42, **dadurch gekennzeichnet, daß** sie frei sind von Si-OR-Gruppen.

44. Aerogele erhalten nach einem Verfahren gemäß den Ansprüchen 1 - 42, **dadurch gekennzeichnet, daß** der Belegunsgrad ihrer inneren Oberfläche mit organischen Oberftächengruppen, die durch Oberflächenmodifikation, vorzugsweise Oberflächensilylierung, aufgebracht wurden, mindestens 90 % des theoretisch möglichen Wertes beträgt

45. Aerogele gemäß Anspruch 44, **dadurch gekennzeichnet, daß** sie einen Belegungsgrad von mindestens 2,6 Trimethylsilylgruppen pro nm² aufweisen.

46. Aerogele gemäß einem der Ansprüche 43 bis 45, **dadurch gekennzeichnet, daß** sie Zusatzstoffe enthalten.

47. Aerogele gemäß Anspruch 46, **dadurch gekennzeichnet, daß** sie als Zusatzstoffe ionische Verbindungen, vorzugsweise NaCl, enthalten.

48. Aerogele gemäß Anspruch 46 oder 47, **dadurch gekennzeichnet, daß** sie als Zusatzstoffe Trübungsmittel, vorzugsweise IR-Trübungsmittel, enthalten.

49. Aerogele gemäß einem der Ansprüche 46 bis 48, **dadurch gekennzeichnet, daß** sie als Zusatzstoffe Fasern enthalten.

50. Aerogele gemäß mindestens einem der Ansprüche 46 bis 49, **dadurch gekennzeichnet, daß** sie eine innere Oberfläche nach BET von weniger als 600 m²/g, vorzugsweise weniger als 500 m²/g, aufweisen.

51. Aerogele erhalten nach einem Verfahren gemäß den Ansprüchen 1 - 42, **dadurch gekennzeichnet, daß** sie Wärmeleitfähigkeiten von < 12 mW/mK aufweisen.

52. Aerogele gemäß mindestens einem der Ansprüche 43 bis 51, auf silikatischer Basis.

53. Verwendung von Aerogelen gemäß mindestens einem der Ansprüche 43 bis 52 als Wärmeisolationsmaterialien.

54. **Verfahren zur Herstellung von organisch modifizierten Lyogelen, bei** dem man
a) ein Hydrogel vorlegt und
b) das in Schritt a) erhaltene Hydrogel unter Verzicht eines Lösungsmitttelaustausches des Wassers gegen ein anderes Lösungsmittel obertlächenmodifiziert.

55. Lyogele erhalten nach Anspruch 54, **dadurch gekennzeichnet, daß** sie frei sind von Si-OR-Gruppen.

56. Lyogele erhalten nach Anspruch 54, **dadurch gekennzeichnet, daß** der Belegungsgrad ihrer inneren Oberfläche mit organischen Oberflächengruppen, die durch Oberflächenmodifikation, vorzugsweise Oberflächensilylierung, aufgebracht wurden, mindestens 90 % des theoretisch möglichen Wertes beträgt.

57. Lyogele gemäß Anspruch 55 oder 56, **dadurch gekennzeichnet, daß** sie Hydrogele sind.

58. Verwendung von Lyogelen gemäß mindestens einem der Ansprüche 55 bis 57 in der Chromatographie, in der Kosmetik und im Pharmabereich.

## Claims

1. A process for preparing an organically modified aerogel, which comprises
a) introducing a hydrogel as initial charge,
b) subjecting the hydrogel obtained in step a) to surface modification without solvent exchange of the water for a different solvent, and
c) drying the surface-modified gel obtained in step b).

2. A process as claimed in claim 1, wherein a silicatic hydrogel is introduced as initial charge in step a).

3. A process as claimed in claim 2, wherein the silicatic hydrogel introduced as initial charge in step a) is prepared by bringing an aqueous waterglass solution to a pH □ 3 with the aid of an acidic ion exchanger resin, a mineral acid or a hydrochloric acid solution, polycondensing the resulting silicic acid by addition of a base to form a SiO₂ gel, and, optionally, washing the gel with water to free it of electrolyte.

4. A process as claimed in claim 2, wherein the silicatic hydrogel introduced as initial charge in step a) is prepared by obtaining it from an aqueous waterglass solution with the aid of at least one organic and/or inorganic acid *via* the intermediate stage of a silica sol.

5. A process as claimed in claim 2, wherein the silicatic hydrogel introduced as initial charge in step a) is obtained by hydrolysis and polycondensation of silicon tetrachloride.

6. A process as claimed in at least one of claims 2 to 5, wherein additives are added before and/or during the preparation of the gel.

7. A process as claimed in claim 6, wherein opacifiers and/or fibres are added as additives.

8. A process as claimed in at least one of the preceding claims, wherein the hydrogel obtained in step a) is aged before being surface-modified in step b).

9. A process as claimed in at least one of the preceding claims, wherein the hydrogel obtained is subjected to surface silylation in step b).

10. A process as claimed in claim 9, wherein the silylating agent is used in liquid form and/or as a gas or vapour.

11. A process as claimed in claim 9 or 10, wherein as silylating agent there is employed at least one silane of the formula R¹₄₋ₙSiClₙ or R¹₄₋ₙSi(OR²)ₙ where n = 1 to 4, wherein R¹ and R² independently of one another are identical or different and are each a hydrogen atom or a non-reactive, organic, linear, branched, cyclic, saturated or unsaturated, aromatic or heteroaromatic radical.

12. A process as claimed in claim 11, wherein trimethylchlorosilane is employed as silylating agent.

13. A process as claimed in claim 9 or 10, wherein as silylating agent there is employed at least one disiloxane of the formula I and/or disilazane of the formula II
R₃Si-O-SiR₃ (I)
R₃Si-N(H)-SiR₃ (II)
wherein the radicals independently of one another are identical or different and are each a hydrogen atom or a non-reactive, organic, linear, branched, cyclic, saturated or unsaturated, aromatic or heteroaromatic radical.

14. A process as claimed in claim 13, wherein the silylating agent employed in step b) is a symmetrical disiloxane.

15. A process as claimed in claim 13 or 14, wherein the silylating agent employed in step b) is a disiloxane in which all radicals R are identical.

16. A process as claimed in at least one of claims 13 to 15, wherein the silylating agent employed is hexamethyldisiloxane.

17. A process as claimed in at least one of the preceding claims, wherein at least one acid and/or base is introduced into the hydrogel before surface modification.

18. A process as claimed in claim 17, wherein HCI is used as acid.

19. A process as claimed in at least one of the preceding claims, wherein the hydrogel is introduced into the silylating agent or agents, and then at least one acid and/or base is added.

20. A process as claimed in claim 19, wherein HMDSO is used as silylating agent.

21. A process as claimed in claim 19 or 20, wherein hydrochloric acid is used as acid.

22. A process as claimed in at least one of the preceding claims, wherein the agent for surface modification is generated shortly before and/or during the surface modification, preferably by means of an acid.

23. A process as claimed in at least one of the preceding claims, wherein the surface modification is accelerated by means of a catalyst.

24. A process as claimed in at least one of the preceding claims, wherein at least one carrier gas or carrier gas stream is used in step b) in addition to the agent for surface modification.

25. A process as claimed in at least one of the preceding claims, wherein some of the water in the pores of the hydrogel reacts with the agent used for surface modification to form a water-insoluble compound.

26. A process as claimed in claim 25, wherein HMDSO is formed.

27. A process as claimed in at least one of the preceding claims, wherein the outer surface of the hydrogel is dried prior to surface modification.

28. A process as claimed in claim 27, wherein the outer surface is dried by means of at least one gas.

29. A process as claimed in claim 27 or 28, wherein the outer surface is dried by means of HCl gas.

30. A process as claimed in claim 27, wherein the outer surface is dried by means of HMDSO.

31. A process as claimed in at least one of the preceding claims, wherein the surface-modified gel is washed with a protic or aprotic solvent prior to step c).

32. A process as claimed in at least one of the preceding claims, wherein the surface-modified gel is washed with a silylating agent prior to step c).

33. A process as claimed in at least one of the preceding claims, wherein the surface-modified gel is subjected to subcritical drying in step c).

34. A process as claimed in at least one of claims 2 to 33, wherein the gel obtained in step a) is reacted, prior to silylation, with a solution of a condensable orthosilicate of the formula R¹₄₋ₙSi(OR²)ₙ, preferably an alkyl and/or aryl orthosilicate, where n = 2 to 4 and R¹ and R² independently of one another are hydrogen atoms or linear or branched C₁-C₆-alkyl radicals, cyclohexyl radicals or phenyl radicals, or with an aqueous silicic acid solution.

35. A process as claimed in at least one of the preceding claims, wherein surface modification is carried out in the presence of additives in the hydrogel.

36. A process as claimed in claim 35, wherein ionic compounds, preferably NaCl, are used as additives.

37. A process as claimed in claim 35 or 36, wherein opacifiers, preferably IR opacifiers, are used as additives.

38. A process as claimed in claim 1, wherein in step b) the silylating agent is provided directly as reactant, without prior exchange of the water contained in the pores for an organic solvent or CO₂.

39. A process as claimed in claim 1, wherein in step b) the surface of the hydrogel is modified without prior solvent exchange.

40. A process as claimed in claim 1, wherein the silylating agents required for the actual silylation reaction are generated from other substances.

41. A process as claimed in claim 1, wherein the silylating agents required for the actual silylation reaction are generated from other silylating agents.

42. A process as claimed in claim 1, wherein the silylating agents required for the actual silylation reaction are generated before and/or during the silylation reaction.

43. An aerogel obtained by a process as claimed in claims 1 to 42, which is free of Si-OR groups.

44. An aerogel obtained by a process as claimed in claims 1 to 42, wherein the degree of coverage of its internal surface with organic surface groups which have been applied by surface modification, preferably surface silylation, is at least 90% of the theoretically possible value.

45. An aerogel as claimed in claim 44, which has a degree of coverage of at least 2.6 trimethylsilyl groups per nm².

46. An aerogel as claimed in any one of claims 43 to 45, which comprises additives.

47. An aerogel as claimed in claim 46, which comprises ionic compounds, preferably NaCl, as additives.

48. An aerogel as claimed in claim 46 or 47, which comprises opacifiers, preferably IR opacifiers, as additives.

49. An aerogel as claimed in any one of claims 46 to 48, which comprises fibres as additives.

50. An aerogel as claimed in at least one of claims 46 to 49, which has a BET internal surface area of less than 600 m²/g, preferably less than 500 m²/g.

51. An aerogel obtained by a process as claimed in claims 1 to 42, which has a thermal conductivity of < 12mW/mK.

52. An aerogel as claimed in at least one of claims 43 to 51, which is based on silicate.

53. The use of an aerogel as claimed in at least one of claims 43 to 52 as a thermal insulation material.

54. A process for preparing an organically modified lyogel, which comprises
a) introducing a hydrogel as initial charge and
b) subjecting the hydrogel obtained in step a) to surface modification without solvent exchange of the water for a different solvent.

55. A lyogel obtained according to claim 54, which is free of Si-OR groups.

56. A lyogel obtained according to claim 54, wherein the degree of coverage of its internal surface with organic surface groups which have been applied by surface modification, preferably surface silylation, is at least 90% of the theoretically possible value.

57. A lyogel as claimed in claim 55 or 56, which is a hydrogel.

58. The use of a lyogel as claimed in at least one of claims 55 to 57 in chromatography, in cosmetology and in the pharmaceuticals sector.

## Revendications

1. Procédé de préparation d'aérogels modifiés organiquement, dans lequel on
a) prépare un hydrogel,
b) on modifie en surface l'hydrogel obtenu à l'étape a) sans échange de solvant de l'eau contre un autre solvant, et
c) on sèche le gel modifié en surface obtenu à l'étape b).

2. Procédé selon la revendication 1, **caractérisé en ce que** l'on prépare à l'étape a) un hydrogel silicaté.

3. Procédé selon la revendication 2, **caractérisé en ce que** l'on prépare à l'étape a) un hydrogel silicaté, qui est préparé en amenant une solution aqueuse de verre soluble à une valeur de pH ≤ 3 au moyen d'une résine acide échangeuse d'ions, un acide minéral ou une solution d'acide chlorhydrique, en polycondensant l'acide silicique ainsi produit par ajout d'une base en un gel de SiO₂ et en lavant éventuellement le gel avec de l'eau jusqu'à ce qu'il soit sans électrolyte.

4. Procédé selon la revendication 2, **caractérisé en ce que** l'on prépare un hydrogel silicaté à l'étape a), qui est **caractérisé en ce qu'**on l'obtient à partir d'une solution aqueuse de verre soluble au moyen d'au moins un acide organique et/ou inorganique via une étape intermédiaire d'un sol d'acide silicique.

5. Procédé selon la revendication 2, **caractérisé en ce que** l'on prépare un hydrogel silicaté à l'étape a), que l'on obtient par hydrolyse et polycondensation de tétrachlorure de silicium.

6. Procédé selon au moins l'une des revendications 2 à 5, **caractérisé en ce que** l'on ajoute des additifs avant et/ou pendant la préparation du gel.

7. Procédé selon la revendication 6, **caractérisé en ce que** l'on ajoute comme additifs des agents opacifiants et/ou des fibres.

8. Procédé selon au moins l'une des revendications précédentes, **caractérisé en ce qu'**on laisse vieillir l'hydrogel obtenu à l'étape a), avant de le modifier en surface à l'étape b).

9. Procédé selon au moins l'une des revendications précédentes, **caractérisé en ce qu'**on silyle en surface l'hydrogel obtenu à l'étape b).

10. Procédé selon la revendication 9, **caractérisé en ce que** l'on utilise un agent de silylation sous forme liquide et/ou sous la forme d'un gaz ou de vapeur.

11. Procédé selon la revendication 9 ou 10, **caractérisé en ce qu'**on utilise comme agent de silylation au moins un silane des formules R¹₄₋ₙSiClₙ ou R¹₄₋ₙSi(OR²)ₙ avec n = 1 à 4, dans lesquelles R¹ et R² représentent indépendamment l'un de l'autre, identiques ou différents, respectivement un atome d'hydrogène ou un radical non réactif, organique, linéaire, ramifié, cyclique, saturé ou insaturé, aromatique ou hétéro-aromatique.

12. Procédé selon la revendication 11, **caractérisé en ce que** l'on utilise comme agent de silylation le triméthylchlorosilane.

13. Procédé selon la revendication 9 ou 10, **caractérisé en ce que** l'on utilise comme agent de silylation au moins un disiloxane de formule 1 et/ou un disilazane de formule II,
R₃Si-O-SiR₃ (I)
R₃Si-N(H)-SiR₃ (II)
dans lesquelles les radicaux indépendamment les uns des autres, identiques ou différents, représentent respectivement un atome d'hydrogène ou un radical non réactif, organique, linéaire, ramifié, cyclique, saturé ou insaturé, aromatique ou hétéro-aromatique.

14. Procédé selon la revendication 13, **caractérisé en ce que** l'on utilise comme agent de silylation à l'étape b) un disiloxane symétrique.

15. Procédé selon la revendication 13 ou 14, **caractérisé en ce que** l'on utilise à l'étape b) comme agent de silylation un disiloxane, dans lequel tous les radicaux R sont identiques.

16. Procédé selon au moins l'une des revendications 13 à 15, **caractérisé en ce que** l'on utilise comme agent de silylation l'hexaméthyldisiloxane.

17. Procédé selon au moins l'une des revendications précédentes, **caractérisé en ce que** l'on fournit dans l'hydrogel avant la modification de surface au moins un acide et/ou une base.

18. Procédé selon la revendication 17, **caractérisé en ce que** l'on utilise comme acide le HCl.

19. Procédé selon au moins l'une des revendications précédentes, **caractérisé en ce que** l'on fournit l'hydrogel dans le ou les agents de silylation et on ajoute ensuite au moins un acide et/ou une base.

20. Procédé selon la revendication 19, **caractérisé en ce que** l'on utilise comme agent de silylation le HMDSO.

21. Procédé selon la revendication 19 ou 20, **caractérisé en ce que** l'on utilise comme acide l'acide chlorhydrique.

22. Procédé selon au moins l'une des revendications précédentes, **caractérisé en ce que** l'agent de modification de surface est généré, de préférence au moyen d'un acide, peu de temps avant et/ou pendant la modification de surface.

23. Procédé selon au moins l'une des revendications précédentes, **caractérisé en ce que** l'on accélère la modification de surface au moyen d'un catalyseur.

24. Procédé selon au moins l'une des revendications précédentes, **caractérisé en ce que** l'on utilise à l'étape b) en plus de l'agent pour la modification de surface au moins un gaz porteur ou un courant de gaz porteur.

25. Procédé selon au moins l'une des revendications précédentes, **caractérisé en ce qu'**une partie de l'eau dans les pores de l'hydrogel réagit avec l'agent utilisé pour la modification de surface en donnant un composé insoluble à l'eau.

26. Procédé selon la revendication 25, **caractérisé en ce que** du HMDSO se forme.

27. Procédé selon au moins l'une des revendications précédentes, **caractérisé en ce que** l'on sèche la surface externe de l'hydrogel avant la modification de surface.

28. Procédé selon la revendication 27, **caractérisé en ce que** l'on sèche la surface externe au moyen d'au moins un gaz.

29. Procédé selon la revendication 27 ou 28, **caractérisé en ce que** l'on sèche la surface externe au moyen de HCI gazeux.

30. Procédé selon la revendication 27, **caractérisé en ce que** l'on sèche la surface externe au moyen de HMDSO.

31. Procédé selon au moins l'une des revendications précédentes, **caractérisé en ce que** l'on lave le gel modifié en surface avant l'étape c) avec un solvant protique ou aprotique.

32. Procédé selon au moins l'une des revendications précédentes, **caractérisé en ce qu'**on lave le gel modifié en surface avant l'étape c) avec un agent de silylation.

33. Procédé selon au moins l'une des revendications précédentes, **caractérisé en ce que** l'on sèche le gel modifié en surface à l'étape c) dans des conditions sous-critiques.

34. Procédé selon au moins l'une des revendications 2 à 23, **caractérisé en ce que** l'on met à réagir le gel obtenu à l'étape a) avant la silylation avec une solution d'un orthosilicate approprié à la condensation, de formule R¹₄₋ₙSi(OR²)ₙ, de préférence un orthosilicate d'alkyle ou d'aryle, dans laquelle n = 2 à 4 et R¹ et R² sont indépendamment l'un de l'autre des atomes d'hydrogène, des radicaux alkyle en C₁ à C₆ linéaires ou ramifiés, des radicaux cyclohexyle ou des radicaux phényle, ou avec une solution aqueuse d'acide silicique.

35. Procédé selon au moins l'une des revendications précédentes, **caractérisé en ce que** l'on réalise la modification de surface en présence d'additifs dans l'hydrogel.

36. Procédé selon la revendication 35, **caractérisé en ce que** l'on utilise comme additifs des composés ioniques, de préférence NaCl.

37. Procédé selon la revendication 35 ou 36, **caractérisé en ce que** l'on utilise comme additifs des agents opacifiants, de préférence des agents opacifiants pour le rayonnement IR.

38. Procédé selon la revendication 1, **caractérisé en ce que** l'on offre directement comme réactif l'agent de silylation à l'étape b), sans qu'auparavant un échange de l'eau contenue dans les pores contre un solvant organique ou du CO₂ se soit produit.

39. Procédé selon la revendication 1, **caractérisé en ce que** l'on modifie à l'étape b) la surface de l'hydrogel sans échange préalable de solvant.

40. Procédé selon la revendication 1, **caractérisé en ce que** les agents de silylation nécessaires pour la propre réaction de silylation sont générés à partir d'autres substances.

41. Procédé selon la revendication 1, **caractérisé en ce que** les agents de silylation nécessaires pour la propre réaction de silylation sont générés à partir d'autres agents de silylation.

42. Procédé selon la revendication 1, **caractérisé en ce que** les agents de silylation nécessaires pour la propre réaction de silylation sont générés avant et/ou pendant la réaction de silylation.

43. Aérogels obtenus au moyen d'un procédé selon les revendications 1 à 42, **caractérisés en ce qu'**ils sont exempts de groupes Si-OR.

44. Aérogels obtenus au moyen d'un procédé selon les revendications 1 à 42, **caractérisés en ce que** le degré d'occupation de leur surface interne avec des groupes de surface organiques, qui ont été déposés par modification de surface, de préférence par silylation de la surface, est au moins 90 % de la valeur théoriquement possible.

45. Aérogels selon la revendication 44, **caractérisés en ce qu'**ils présentent un degré d'occupation d'au moins 2,6 groupes triméthylsilyle par nm².

46. Aérogels selon l'une des revendications 43 à 45, **caractérisés en ce qu'**ils contiennent des additifs.

47. Aérogels selon la revendication 46, **caractérisés en ce qu'**ils contiennent comme additifs des composés ioniques, de préférence NaCl.

48. Aérogels selon la revendication 46 ou 47, **caractérisés en ce qu'**ils contiennent comme additifs des agents opacifiants, de préférence des agents opacifiants pour le rayonnement IR.

49. Aérogels selon l'une des revendications 46 à 48, **caractérisés en ce qu'**ils contiennent comme additifs des fibres.

50. Aérogels selon au moins l'une des revendications 46 à 49, **caractérisés en ce qu'**ils présentent une surface interne selon BET de moins de 600 m²/g, de préférence inférieure à 500 m²/g.

51. Aérogels obtenus au moyen d'un procédé selon les revendications 1 à 42, **caractérisés en ce qu'**ils présentent une conductivité thermique de < 12 mW/mK.

52. Aérogels selon au moins l'une des revendications 43 à 51, à base de silicate.

53. Utilisation d'aérogels selon au moins l'une des revendications 43 à 52 comme matériaux d'isolation thermique.

54. Procédé de préparation de lyogels organiquement modifiés, dans lequel on
a) prépare un hydrogel et
b) on modifie en surface l'hydrogel obtenu à l'étape a) sans échange de solvant de l'eau contre un autre solvant.

55. Lyogels obtenus selon la revendication 54, **caractérisés en ce qu'**ils sont exempts de groupes Si-OR.

56. Lyogels obtenus selon la revendication 54, **caractérisés en ce que** le degré d'occupation de leur surface interne avec des groupes de surface organiques, qui ont été déposés par modification de surface, de préférence par silylation de la surface, est au moins 90 % de la valeur théoriquement possible

57. Lyogels selon la revendication 55 ou 56, **caractérisés en ce qu'**ils sont des hydrogels.

58. Utilisation de lyogels selon au moins l'une des revendications 55 à 57 en chromatographie, en cosmétique et dans le domaine pharmaceutique.
